# EUROPÄISCHE PATENTANMELDUNG

(11) **EP 2 317 273 A2**
(43) Veröffentlichungstag der Anmeldung: **04.05.2011**
(21) Anmeldenummer: 10013979.9
(22) Anmeldetag: 26.10.2010
(51) Int. Cl.: F28G 1/16, F28G 15/02

(54) **Reinigungsvorrichtung für Wärmetauscher**

(30) Priorität: 27.10.2009 DE 102009050863; 02.03.2010 DE 102010010011
(71) Anmelder: JNW CleaningSolutions GmbH, 44866 Bochum (DE)
(72) Erfinder: Jaresch, Dirk, 44866 Bochum (DE)
(74) Vertreter: Kaewert, Klaus

(57) **Zusammenfassung**

Nach der Erfindung ist zur Reinigung von Wärmetauscherflächen eine Reinigungsvorrichtung vorgesehen, die einen Düsenstock mit verschiedenen Düsen besitzt, wobei den Düsen durch eine Schlauchleitung Reinigungswasser zugeführt wird, die in einer Energiekette gehalten ist.

## Beschreibung

Die Erfindung betrifft eine transportable oder stationäre Reinigungsvorrichtung für Wärmetauscher, insbesondere Luftkonsationsanlagen.

Luftkondensationsanlagen (Lukos) werden als ein geschlossenes System zur Kondensierung des Abdampfes bzw. des Überschußdampfes von Turbinenanlagen verwendet. Die Gesamtkühlfläche ist für die produzierte Dampfmenge ausgelegt. Dabei wird von einem bestimmten Wärmeübergang von der Kühlfläche in die Umgebungsluft ausgegangen. Der Wärmeübergang bleibt jedoch nicht konstant. An den Kühlflächen kommt es außen zur Verschmutzung. Die Verschmutzung wird unter anderem durch Blütenpollen, Laub, Industrieabgase, Flugstäube verursacht und führt zu Belägen an den Kühlflächen. Dadurch verschlechtert sich der Wärmeübergang.

Anfänglich auftretende Verunreinigungen können durch evtl. vorhandene Drehzahlreserven der Lüfter ausgeglichen werden. Das hat bereits den Nachteil höheren Energieaufwandes zum Betrieb der Anlage.

Eine weitere Verschmutzung kann nicht mehr kompensiert werden. Sie führt zu einer Reduzierung des Wärmeüberganges und somit zu einer verminderten Kühlleistung für die Dampfkonsation.

Infolge der nachlassenden Kühlwirkung steigt der Dampfdruck in der Abdampfleitung. Die Turbine verliert an Leistung. Die Energieerzeugung des Generators verringert sich. Üblicherweise reagieren die Anlagen darauf. Sind z.B. Turbinen für einen Abdampfdruck von O,2bar absolut ausgelegt, werden sie bei einem Anstieg des Dampfdruckes auf O,8 bar durch Überwachungseinrichtungen abgeschaltet.

Bei Wasserkühlern und Produktkühlem, wie sie vorzugsweise in der chemischen Industrie vorkommen, finden sich die gleichen Probleme. Auch hier kann ein Nachlassen des Wärmeüberganges anfänglich durch vorhandene Luftmengenreserven ausgeglichen werden. Danach kommt es jedoch zu einem stetigen Temperaturanstieg im Wasserkreislauf oder Produktstrom. Das führt in absehbarer Zeit zu einer Betriebsstörung.

Obige Zusammenhänge sind den Betriebsleuten hinlänglich bekannt.

Es liegt auf der Hand, daß der Verschmutzung der Kühlflächen durch Reinigung entgegengewirkt wird.

Ein älterer Vorschlag sieht stationäre Reinigungseinrichtungen vor, mit denen eine zuverlässige Reinigung der Kühlflächen erreicht wird. Bei derartigen Reinigungsvorrichtungen können die Reinigungsdüsen, ihre Stellung und der Reinigungsdruck den Kühlflächen angepaßt werden. Dadurch wird eine tatsächliche Reinigung ohne die Gefahr einer Beschädigung möglich.

Ein anderer älterer Vorschlag sieht vor, daß eine Reinigungsvorrichtung für mehrere Kühlflächen (Kühlregister) einer Anlage verwendet wird. Das wird mit Hilfe einer Fahranlage erreicht. Die Fahranlage ähnelt einer Kranbahn, mit der die Vorrichtung von einer Kühlfläche zur anderen umgesetzt wird.

Die stationären Reinigungsvorrichtungen und auch die umsetzbare Reinigungsvorrichtung haben allerdings gemeinsam, daß zunächst ein erheblicher Investitionsaufwand getätigt werden muß. Das steht naturgemäß dem Einsatz solcher Geräte entgegen.

Nach einem anderen älteren Vorschlag der DE 19800018 A wird obigen Problemen dadurch begegnet, daß
a) eine tragbare Reinigungsvorrichtung mit einem sich vertikal über die Höhe des Kühlregisters erstreckenden Fahrwagen geschaffen wird, der horizontal verfahrbar ist und einen darauf nach oben und nach unten verfahrbaren Düsenstock trägt.
b) wobei die Reinigungsvorrichtung mehrere Kühlrohre oder auch mehrere Kühlregister übergreift und
c) wobei die Reinigungsvorrichtung eine Tragkonstruktion mit einem in Fahrrichtung des Fahrwagens verlaufenden Kantprofil besitzt und der Fahrwagen auf dem Kantprofil verfahrbar angeordnet ist und/oder die Tragkonstruktion durch Steckverbindungen längenänderbar ist

Dabei können auch zwei oder mehr Kantprofile nebeneinander angeordnet sein. Die Verwendung eines einzigen Kantprofils beinhaltet jedoch einen besonderen Schritt zu einer optimal leichten und zugleich funktionssicheren Vorrichtung.

Vorzugsweise ist das Kantprofil als Hohlprofil ausgebildet und durch Steckverbindungen längenänderbar. Die Längenänderbarkeit erleichtert die Arbeit mit einer einzigen Vorrichtung an verschiedenen Lukos oder dergleichen.

Das Kantprofil und die Steckverbindung sind für eine Längenänderung günstig. Nach dem älteren Vorschlag kann das Kantprofil aus mehreren Teilen zusammengesetzt werden. Die Vorrichtung kann aber auch einen Kopf und einen Fuß und zwischen Kopf und Fuß ein zur Längenänderung auswechselbares Kantprofil besitzen.

Die Steckverbindung wird mit Hilfe von separaten Dornen/Zapfen herbeigeführt, die in zwei miteinander zu verbindende Rohrenden greifen. Es können aber auch Dorne/Zapfen an den Rohrenden angebracht werden, so daß das eine Rohr mit einem Dorn/Zapfen in das andere Rohr greift.

Wahlweise befinden sich nach dem älteren Vorschlag an Kopf und Fuß der Vorrichtung Arme für unterschiedliche Zwecke, z.B. zur Abstützung und/oder Führung und/oder Halterung der Vorrichtung und/oder zur Halterung von Führungsrollen/Rädern/Scheiben und/oder zur Halterung von Antrieben und/oder Pumpen vorgesehen sein.

Die Halterungen für Rollen/Räder/Scheiben können verstellbar oder fest angeordnet werden.

Wahlweise können die Arme und/oder Kopf und/oder Fuß aus Teilen lösbar zusammengesetzt sein, so daß ein Auswechseln in Anpassung an bestimmte Bedürfnisse möglich ist. Günstig kann dabei eine Steckverbindung wie bei dem Kantprofil sein. Dem ist förderlich, wenn sich Arme, Kopf und Fuß aus gleichen Profilen zusammensetzen.

Vorzugsweise gehören zu dem Antrieb ein Kraftübertragungsmittel wie Band, Kette, Seil oder Riemen, insbesondere ein Zahnriemen, und ein Getriebemotor mit einem Antriebsritzel. Mit den Rollen/Rädern/Scheiben wird das Kraftübertragungsmittel vorzugsweise über Kopf und Fuß hinweg geführt und die notwendige Spannung erzeugt. Zur Spannungserzeugung ist die zugehörige Rolle/Rad/Scheibe quer zur Längsrichtung des Kraftübertragungsmittels verstellbar.

Das Kraftübertragungsmittel greift an den Fahrwagen und wird mittels des Getriebemotors bewegt. Dabei kann das Kraftübertragungsmittel um das Antriebsritzel herumgeführt oder mittels einer weiteren Rolle/Rades/Scheibe gegen das Antriebsritzel gedrückt werden.

Zur Gewichtsreduzierung kann die Verwendung von Aluminium für die Profile und eine beschränkte Breite der Düsen bzw. des Düsenstockes im Fahrwagen beitragen. Es kann aber auch von Vorteil sein, die Profile aus hochfestem Stahlblech mit geringer Dicke. anzufertigen Die Breite des Düsenstockes wird durch die Anzahl der an einem Rohr im Düsenstock angeordneten Düsen bestimmt.

Die Düsen bzw. der Düsenstock kann trotz beschränkter Breite durch Verfahren auf der gesamten Breite/Länge des Fahrwagens alle darunter liegenden Kühlrohre reinigen. Die starke Gewichtsreduzierung schont auch die Kühlregister. Das ist vor allem für Kühlregister mit empfindlichen Kühlrippen wichtig, wenn die Reinigungsvorrichtung auf den Kühlrippen läuft. Unabhängig davon ist es von Vorteil, wenn die Reinigungsvorrichtung auf dem Rahmen der Kühlregister und/oder auf besonderen Führungen/Laufschienen läuft.

Zu den empfindlichen Kühlrohren/Rippen gehören z.B. diejenigen mit rechteckigem Querschnitt, zwischen denen die Kühlrippen als meandemdes Metallband hin- und hergeführt sind.

Hinzu kommt, daß das geringe Gewicht keine Gefahr einer übermäßigen Belastung der Kühlregister mit sich bringt.

Durch Übergreifen mehrerer Kühlregister und Verfahren der Reinigungsdüsen in dem Fahrwagen von einem Kühlregister zum anderen wird eine optimale Arbeitsgestaltung und Arbeits- und Betriebszeitnutzung erreicht.

Die Wasserversorgung der Reinigungsvorrichtung kann über eine mitgeführte Schlauchleitung erfolgen. Wahlweise wird das Wasser über eine zwischengeschaltete Pumpe auf den gewünschten Druck gebracht. Die Pumpe kann an der Vorrichtung befestigt oder separat vor der Vorrichtung aufgestellt werden.

Wahlweise besteht das Reinigungsmittel ganz oder teilweise auch aus einem anderen Stoff als Wasser. Zum Beispiel kann es von Vorteil sein, das Wasser mit Mitteln zu versetzen, welche die Reinigungswirkung des Wassers verstärken.

Bei besonders breiten Kühlanlagen mit einer Vielzahl von nebeneinander angeordneten Registern ist es von Vorteil, im oberen Bereich der Kühlregister und/oder an deren Halterung und/oder an dem Gebäude Laufschienen anzubringen, in bzw. auf denen die Vorrichtung verfahrbar ist, so daß die Reinigungsvorrichtung zum Umsetzen auf ein benachbartes Kühlregister nicht mehr gelöst werden muß, sondern verfahren werden kann.

Die EP 1604164 A zeigt eine Reinigungsvorrichtung mit portalförmigen Bügeln, unter denen der Düsenstockwagen verfahrbar ist. Die portalförmigen Bügel besitzen einen eine U-Form mit

In bevorzugter Ausführung ist an den Bügeln der Reinigungsvorrichtung eine Leiter befestigt. Dies kann dadurch dargestellt werden, daß die Bügel zumindest teilweise aus einem Leiterprofil bestehen.

Wahlweise ist auch eine Höhenverstellung an der Leiter vorgesehen.

Günstig ist, wenn die Leiter klappbare Stufen bzw. Sprossen und/oder ein klappbares Geländer besitzt.

Die Erfindung hat sich die Aufgabe gestellt, die Handhabung der Reinigungsvorrichtung zu erleichtern. Dabei geht die Erfindung von der Überlegung aus, die Handhabung der Schlauchleitung zu verbessern. Bisher wird die Schlauchleitung für die Zuführung des Reinigungswassers immer von Hand geführt. Anlaß ist, daß die empfindlichen Kühlrippen auf den Kühlrohren durch die Schlauchleitung beschädigt werden können oder sich die Schlauchleitung an dem Düsenstock verhaken können.

Nach der Erfindung wird die Handhabung der Schlauchleitung mit einer Energiekette erleichtert. Die Energieketten sind bei bewegten Elektroleitungen bekannt. Dort dienen die Energieketten dazu, gleichzeitig mehrere Elektroleitungen geordnet nebeneinander zu führen, so daß die verschiedenen Elektroleitungen sich nicht ineinander verwickeln. Das Verwickeln führt zu frühzeitigem Verschleiß und anderen Nachteilen bis hin zu einem Abreißen einzelner Leitungen. Solche Problematik stellt sich bei der erfindungsgemäßen Wasserzuleitung nicht, weil jeweils nur eine Schlauchleitung zur Anwendung kommt. Außerdem sind die Schlauchleitungen robust, so daß eine Beschädigung der Schlauchleitung nicht zu befürchten ist.

Die Energieketten werden genutzt, um der Schlauchleitung eine automatische Führung zu geben und die Führung von Hand entbehrlich zu machen. Die automatische Führung ist wesentlich zuverlässiger als die Führung von Hand. Damit werden Schäden an den Kühlrippen der Kühlrohr durch unzuverlässige, automatische Führung verhindert.

Die Energieketten bestehen aus Kettengliedern, die durch Gelenke miteinander verbunden sind. Die Gelenkigkeit ist aber begrenzt, so daß die Kette sich nur zwischen bestimmten Krümmungsgrenzen bewegen kann. Die Krümmungsgrenzen liegen bei gerade/unendlich (maximaler Krümmungsradius) und einem Krümmungsradius von zum Beispiel 300 oder 600 oder 900 mm (minimaler Krümmungsradius). Dieser Krümmungsradius ist von der Auslegung der Energieketten abhängig und kann für die Herstellung jeder Kette entsprechend dem jeweiligen Bedarf vorgegeben werden.

Nach der Erfindung werden Ketten verwendet, deren minimaler Krümmungsradius mindestens gleich der zulässigen Schlauchkrümmung ist. Vorzugsweise werden Energieketten verwendet, deren minimaler Krümmungsradius mindestens 50mm über der zulässigen Schlauchkrümmung liegt.

Anders als bei üblichen Kettenglieder von Gelenkketten wie zum Beispiel Fahrradketten erstrecken sich die Gelenkbolzen der Kette nicht durch die Kettenglieder hindurch. Vielmehr bleibt der Innenraum frei, so daß freier Raum zum Durchführen einer Schlauchleitung besteht. Um von einer Fahrradkette zu einer Gelenkkette zu kommen,
a)müssten die seitlichen Laschen eines Kettengliedes durch einen oberen und/oder unteren Steg miteinander verbunden werden und
b)müsste anstelle eines durchgehenden, langen Gelenkbolzes zur Verbindung zweier Kettenglieder jeweils zwei kurze Gelenkbolzen zur Anwendung kommen, welche jeweils eine Lasche des einen Kettengliedes mit der korrespondierenden Lasche des anderen Kettengliedes gelenkig verbinden und in geringem Abstand von den miteinander verbundenen Laschen enden
c)die Laschen des einen Kettengliedes mit Schwenkwinkel begrenzenden Anschlägen in Ausnehmungen der Laschen des anderen Kettengliedes greifen.

Insgesamt bilden die Kettenglieder zumindest teilweise eine U-Form.

Wahlweise können die Kettenglieder an der offenen Seite durch Stege geschlossen werden. Vorzugsweise geschieht das nach Einlegen der Schlauchleitung.

Durch Schließen der U-Form entsteht eine Kastenform.

Die Gelenkketten geben der Schlauchleitung jede gewünschte Führung.

Überraschenderweise ergibt sich in der Gelenkkette darüber hinaus ein gutes Verschleißverhalten der Schlauchleitung, weil die Schlauchleitung nicht ständig an einer oder mehreren bevorzugten Stellen gekrümmt wird. Vielmehr erfährt jede Stelle der Schlauchleitung eine gleichartige Krümmung. Diese Krümmung ist viel geringer als eine Krümmung an einer gleich bleibenden Stelle. Das heißt, der krümmungsbedingte Verschleiß wird bei erfindungsgemäßer Anwendung auf die ganze Länge des Schlauches verteilt.

Vorzugsweise finden verschließbare/kapselbare Energieketten Anwendung. Solche Ketten besitzen Kettenglieder, die an der einen Breitseite geschlossen sind, während die andere Breitseite offen ist und mit Deckeln verschließbar ist. Nach Einlegen des Schlauches in die einseitig offene Energiekette wird die offene Seite geschlossen. Die Kapselung kann für den rauen Reinigungsbetrieb von Vorteil sein.

Nach der Erfindung umschließt die Energiekette die Schlauchleitung mindestens in allen Bereichen, die durch die Düsenstockbewegung eine Krümmung erfahren. Vorzugsweise umschließt die Energiekette die Schlauchleitung auf der ganzen Länge.

Die notwendige Länge wird durch den Fahrweg des Düsenstockes bestimmt. Mindestens diese Länge muß die Schlauchleitung haben und muß auch die Energiekette haben, wenn die Energiekette während des gesamten Fahrweges die Schlauchleitung hält.

Zusätzliche Längen für die Schlauchleitung und die Energiekette können sich durch Art und Umfang der Wasserzuführung ergeben. Vorzugsweise geht die Erfindung von einer Wasserzuführung am Fußteil der Reinigungsvorrichtung aus. Das Fußteil der Reinigungsvorrichtung ist bei geneigt angeordneten Vorrichtungen(entsprechend geneigt verlaufenden Kühlregistern) wie auch bei senkrecht angeordneten Vorrichtungen(entsprechend senkrecht verlaufenden Kühlregistern) das untere Ende der Vorrichtung. Dort ist üblicherweise auch der Antrieb der Vorrichtung angeordnet Das hat verschiedene Gründe. Ein Grund ist die übliche Wasserzuführung von unten.

Bei horizontal angeordneten Reinigungsvorrichtungen(entsprechend horizontal verlaufenden Kühlregistern) kommen üblicherweise gleichartige Reinigungsvorrichtungen wie bei geneigt verlaufenden Kühlregistern zum Einsatz. Der Antrieb befindet sich dabei an einem Ende der Vorrichtung, das in geneigter Anordnung das Fußteil der Vorrichtung ist. Zugleich gehen die üblichen Vorrichtungen davon aus, daß am Fußteil die Wasserzuführung erfolgt. In Anwendung auf eine horizontal angeordnete Reinigungsvorrichtung kann das Vorrichtungsende, an dem der Antrieb und Wasseranschluß vorhanden sind, die Bezeichnung Fußteil tragen.

Die Wasserzuführung befindet sich an horizontalen Kühlregistern üblicherweise an einer Registerseite, an der die Kühlrohre einmünden. Die Reinigungsvorrichtung wird so auf die Kühlrohre und deren Rippen oder auf dafür am Register vorgesehene Fahrschienen aufgesetzt, daß das Fußteil der Wasserzuführung zugewandt ist.

Je nach der Zuführung kann sich ergeben, daß die Schlauchleitung erst im Abstand (Variante a) vom fußteilseitigen Ende der Vorrichtung beginnt oder aber am fußteilseitigen Ende (Variante b) der Vorrichtung beginnt oder sogar über das fußteilseitige Ende (Variante c) der Vorrichtung hinaus verlängert ist. Dieser Einfluß der Varianten a) bis c) wird bei der Längenbemessung der Schlauchleitung der Reinigungsvorrichtung berücksichtigt. Vorzugsweise wird die erfindungsgemäße Führung des Wasserschlauches an der Reinigungsvorrichtung mit einem Schlauch (anlagenseitigen Schlauch) für die Wasserzuführung bis zur Reinigungsvorrichtung und deren gleichartige Führung mit einer Energiekette kombiniert.

Dabei kann sich ergeben, daß für den Anschluß des anlagenseitigen Schlauches obige Variante a) von Vorteil ist. Dann ergibt sich eine relativ kurze Länge für die Schlauchleitung der Reinigungsvorrichtung.

Bei Anschluß eines anders geführten anlagenseitigen Schlauches können auch die Varianten b) und c) von Vorteil sein.

Eine zusätzliche Länge kann durch die Art des Anschlusses der Schlauchleitung der Reinigungsvorrichtung an dem Düsenstock erforderlich werden. Ein fester Anschluß hat den Vorteil, daß Dichtflächen entfallen. Bei festem Anschluß ist eine bleibende Bogenbildung der Schlauchleitung und der Energiekette von Vorteil. Dieser Bogen wird dann zur Schlauchlänge hinzu gerechnet.

Ein drehbeweglicher/schwenkbeweglicher Anschluß hat den Vorteil einer kürzeren Mindestlänge, andererseits ist der Aufwand für dichtend anzuordnender Dreh- oder Schwenkteile zu berücksichtigen..

Deshalb kommen vorzugsweise feste Anschlüsse der Schlauchleitung zum Einsatz.

Wie oben ausgeführt, gibt es auch verlängerbare Vorrichtungen. Dabei wird der Fahrweg des Düsenstockes in Anpassung an größere Abmessungen von Kühlregistern verlängert. Die Verlängerung erfolgt durch den Einbau von Zwischenstücken/Verlängerungsstücken der beschriebenen Profile.

Für die Anwendung der erfindungsgemäßen Energieketten auf verlängerbare Vorrichtungen ist es von Vorteil, wenn die Energieketten abschnittsweise verlängerbar sind, wobei die Abschnitte den Längen der oben beschriebenen Profile für das Verfahren des Düsenstocks entsprechen. Dadurch kann die Energiekette jeder entstehenden Länge der Reinigungsvorrichtung leicht angepasst werden.

Zugleich ist es von Vorteil, wenn mit Zwischenstücken/Verlängerungsstücken der Profile und den Zwischenstücken/Verlängerungsstücken der Energiekette auch angepaßte Zwischenstücke/Verlängerungsstücke der Schlauchleitung zum Einsatz kommen.

Für die Verbindung der Schlauchleitung kommen herkömmliche Schraubverbindungen, zum Beispiel mit Überwurfmuttern in Betracht. Die Arbeitszeit verkürzt sich, wenn Steckverbindungen und oder Drehverbindungen mit Schnellverschlüssen für die Schlauchleitungen verwendet werden. Schnellverschlüsse sind in verschiedenen Formen handelsüblich. Schnellverschlüsse können unterschiedlicher Bauweise sein. Die Betätigungsbewegung kann in axialer Richtung und/oder in Umfangsrichtung der Schlauchleitung erfolgen. Schnellverschlüsse können auch einen unter dem Druck des durchströmenden Mediums selbsthemmenden Verschluß besitzen.

Bei der bisherigen Handführung der Schlauchleitung hat sich die Verlängerungsfrage nicht gestellt, weil üblicherweise mit einer Schlauchleitung gearbeitet worden ist, deren Länge jedem Bedarf gewachsen ist. Bei geringerem Längenbedarf besitzen die Schlauchleitungen eine Überlänge, deren Handhabung schwieriger als die Handhabung von Schlauchleitungen mit angepasster Länge ist.

Wenn die erfindungsgemäße Reinigungsvorrichtung nach dem Verlängern für einen Einsatz an einem großen Kühlregister für einen weiteren Einsatz auf einem kleinen Kühlregister rückgebaut wird, so gilt obiges für den Rückbau entsprechend. Dabei werden die Zwischenstücke/Verlängerungsstücke der Profile wieder ausgebaut. Das gleiche gilt für die ZwischenstückeNerlängerungsstücke der Energiekette und die Zwischenstücke/Verlängerungsstücke der Schlauchleitung.

Günstig sind für die Längenanpassung der Energiekette schnell lösbare Gelenkbolzen. Schnell lösbar sind Gelenkbolzen, die mit einem Einstich/Nut für einen Sprengring versehen sind. Sprengringe sind Sicherungsringe aus Federstahl, die sehr dünn ausgebildet sind, gleichwohl einen ausreichenden Halt für die Gelenkbolzen geben. Sprengringe finden sowohl in Bohrungen als auch auf Bolzen Verwendung.

Sprengringe kommen in unterschiedlichen Ausführungsformen vor. Allen Ausführungsformen ist gemeinsam, daß sie einen Schlitz haben und zusammengedrückt in die Bohrungen passen oder aufgespreizt auf einen Bolzen aufgeschoben werden können.

Im übrigen unterscheiden sich die bekanntesten Ausführungsformen der Sprengringe für die Anwendung auf Bolzen dadurch, daß die einen Sprengringe an den freien Enden mit Bohrungen versehen sind, in die mit einer Spreiz-Zange gegriffen werden kann, um die Sprengringe aufzuspreizen, während die anderen Sprengring gegenüberliegend zu dem Schlitz mit zwei Ausnehmungen versehen sind, so daß dort ein Schraubenzieher angesetzt werden kann, um die Sprengringe aus der Sicherungsstellung herauszuhebeln. In die Sicherungsstellung kommen die letztgenannten Sprengringe, in dem sie mit einem geeigneten Werkzeug, zum Beispiel mit einem Schraubenzieher, in den Einstich/Nut gedrückt werden.

Es ist von Vorteil, wenn alle Kettenglieder der Energiekette mit lösbaren Gelenkbolzen versehen sind. Dann kann eine Änderung oder Reparatur der Energiekette beim Hersteller oder Betreiber der Reinigungsvorrichtung vorgenommen werden.

Die erfindungsgemäße Führung der Schlauchleitung der Reinigungsvorrichtung mittels Energiekette ist vorzugsweise parallel zu dem Fahrweg des Düsenstockes angeordnet. Günstig ist, wenn das den Düsenstock bildenden Rohrgestänge zumindest teilweise auch parallel zum Fahrweg verläuft und der Durchtrittsbreite/Duchtrittshöhe an den Portalen angepaßt ist. Dann kann der Düsenstock in der Anwendung der oben beschriebenen Reinigungsvorrichtungen durch die Portale hindurchfahren. Es können auch die Schlauchleitung und die Energiekette durch die Portale hindurchbewegt werden, wenn deren Abmessungen an die Durchfahrtbreite und Höhe der Portale angepaßt sind.

Je nach Größe des Düsenstockes und Anbindung der Schlauchleitung an dem Düsenstock kann sich auch eine Situation ergeben, bei der es nicht auf das Hindurchfahren der Schlauchleitung und der Energiekette durch die Portale ankommt, dann kann die Schlauchleitung mit ihrer Energiekettenführung zwischen den Portalen auch Abmessungen aufweisen, die größer sind als die Durchfahrbreite bzw. Durchfahrthöhe der Portale. Das kann sich zum in senkrechter/aufrecht stehender oder in horizontaler bzw. liegender Anordnung der Energiekette ergeben.

Die erfindungsgemäße Energiekette für die Schlauchleitung kann auch Anwendung finden, wenn es sich nicht um die übliche tragbare Vorrichtung mit zwei Portalen und einem sie verbindenden Fahrprofil handelt. Solche Vorrichtungen sind vorzugsweise stationäre Anlagen mit einer Leiter, die sich über einen wesentlichen Teil des Kühlregisters erstreckt. Die Leiter hat verschiedene Vorteile. Sie kann zur Inspektion, Wartung und Reparatur der Vorrichtung genutzt werden. Sie kann auch zur Inspektion der zu reinigenden Fläche genutzt werden. Auch, wenn solche Leitern bleibend vorgesehen sind, bestehen solche Leitern an zeitgemäßen Vorrichtungen aus Aluminium. Bei größeren Leiterlängen ist vorzugsweise an den Leitern eine versteifende Verstrebung vorgesehen, die zugleich ein Geländer bildet. Dabei können die Leitern das Baukonzept der oben beschriebenen tragbaren Vorrichtungen mit Portalen und einem von den Portalen getragenen Fahrprofil für den Düsenstock ergänzen. Die Leitern können auch eine neue Bauweise ohne Portale begründen. Die Leitern können auch einen gewünschten Beitrag zur Stabilität/Biegefestigkeit der Vorrichtung leisten, in dem sie mit den beschriebenen Portalen fest verbunden sind oder Stelzen zur Abstützung und zum Verfahren der Vorrichtung tragen. Die Biegefestigkeit hat praktische Vorteile, weil eine starke Durchbiegung der Vorrichtung den Abstand der Düsen des Düsenstocks zu den zu reinigenden Kühlrohren und gegebenenfalls zu Kühlregistereinbauten über den Kühlrohren verringert. Starke Veränderungen des Abstandes können die Reinigungsarbeit stören.

Starke Verringerung des Abstandes kann zu einer Kollisionsgefahr des Düsenstockes mit den genannten Kühlregistereinbauten über den Kühlrohren führen.

Die Leiter kann mit Streben, Seitenwangen und dem Leitertritt/Leitersprossen im Querschnitt im Groben eine nach oben offene U-Form oder im Groben eine nach oben offene V-Form einnehmen.

Die U-Form besitzt dabei eine gerade Basis zwischen den zugehörigen Querschnittsschenkeln. Dabei können die Abmessungen variieren. Vorzugsweise ist die Länge der zugehörigen Querschnittsschenkel immer geringer als die Länge der die Querschnittsschenkel verbindenden Basis. Im Rahmen der Beschreibung der Erfindung heißt "im Groben", daß es für den U-förmigen Querschnitt nicht darauf ankommt, ob die jeweilige Schnittfläche nur teilweise oder insgesamt eine U-Form zeigt. Im Sinne der Erfindung gehört zur U-Form, daß in der Querschnittsansicht hinter der Schnittfläche noch andere Teile der Leitern liegen, die sich mit den dargestellten Schnittflächen in der Ansicht zu einer U-Form ergänzen. Das wird an einem Schnitt durch die Leiter zwischen zwei Leitertritten/Streben deutlich. Dann zeigt die Querschnittsansicht eine Schnittfläche der Leiter-Seitenwangen. In der Ansicht werden die Schnittflächen durch die hinter den Schnittflächen sichtbaren (ungeschnittenen) Leitertritten/Streben ergänzt. Verläuft die Querschnittsfläche dagegen durch einen Leitertritt/Strebe, so wird die Schnittfläche der Leiter-Seitenwangen durch die Schnittfläche der Leitertritte/Strebe ergänzt.

Mit den Querschnittsschenkeln der U-förmigen Leiterquerschnitte verhält es sich genauso wie mit der Leiter an sich. Die Querschnittsschenkel besitzen ein zur zugehörigen Leiter-Seitenwange parallel verlaufendes Profil. Vorzugsweise ist dieses Profil in Abständen durch eine genau senkrecht zur Leiter verlaufende Strebe verstärkt. Zwischen den genau senkrecht verlaufenden Streben sind vorzugsweise schräg verlaufende weitere Streifen zur Verstärkung eingezogen, welche mit einem Ende an der zugehörigen Leiter-Seitenwange und mit dem anderen Ende an dem parallel verlaufenden Profil enden.

Wenn nun der Schnitt durch den Querschnittsschenkel genau durch eine senkrecht verlaufende Strebe verläuft, so ergänzt sich die Schnittfläche des parallel verlaufenden Profils mit der Schnittfläche der zugehörigen Seitenwange und der Schnittfläche der senkrecht verlaufenden Strebe. Wenn aber der Schnitt durch den Querschnittsschenkel zwischen zwei senkrecht verlaufenden Streben verläuft, so zeigt die Querschnittsansicht lediglich eine Schnittfläche des parallel verlaufenden Profils und eine Schnittfläche der zugehörigen Seitenwange, welche durch die Ansicht der dahinter liegenden Strebe ergänzt wird.

Es kommen auch U-förmige Leiterquerschnitte für die Anwendung der Erfindung in Betracht, die sich von den vorstehend beschriebenen Leiterquerschnitten dadurch unterscheiden, daß ihnen die genau senkrechten Streben fehlen.

Die Seitenwangen der Leiter und die parallel verlaufenden Profile besitzen vorzugsweise ein rechteckiges Hohlprofil, die Leitertritte/Streben vorzugsweise ein rundes Hohlprofil. Noch günstiger sind Hohlprofile, welche zumindest trittseitig eine zusätzlich profilierte Mantelfläche aufweisen. Das macht die Leiter trittsicherer. Die runden bzw. zusätzlich Hohlprofile für die Leitertritte/Streben erhöhen die Sicherheit beim Begehen gegen Ausrutschen. Die rechteckigen Hohlprofile der Seitenwangen erleichtern die Verbindung der Leitertritte/Streben mit den Seitenwangen. Wenn runde Leitertritte/Streben auf runde Profile auf runde Seitenwangen treffen, so komplizieren sich die Schnittflächen an den Profilen.

Vorzugsweise sind alle Leiterteile an den Verbindungsstellen verschweißt.

In vorstehendem Sinne ist es günstig, wenn auch die parallel zu den Leiter-Seitenwangen verlaufenden Profile und die verbindenden Streben zwischen diesem Profil und den Leiter-Seitenwangen ein rechteckförmiges Hohlprofil bilden.

Die V-Form unterscheidet sich von der U-Form durch die Neigung der Querschnittsschenkel und das Fehlen einer die Querschnittsschenkel verbindenden Basis. Die Querschnittsschenkel berühren sich unmittelbar oder mittelbar an einem Ende Eine mittelbare Berührung ist gegeben, wenn die Querschnittsschenkel an einem gemeinsamen Profil verschweißt sind. Im übrigen können die Querschnittsschenkel in gleicher Weise wie bei U-förmigem Querschnitt ausgebildet sein.

Die Neigung der V-Form kann über der Länge der Leiter variieren oder von Leiter zu Leiter variieren. Es können auch unterschiedliche Bauformen vorkommen.

Die Querschnittsform kann auch eine Mischform von U-Form und V-Form sein. In dem Fall unterscheiden sich die erfindungsgemäßen Querschnittsformen von der oben U-Form dadurch, daß die Querschnittsschenkel nicht parallel, sondern geneigt zueinander verlaufen.

Die Leitern können von Portalen getragen werden. Dann kann es sich um eine oben beschriebene bekannte Vorrichtung mit einem Fahrprofil handeln, das von den Portalen getragen wird. Die Leiter ist dann oben aufgesetzt.

Es kann sich auch um eine Ausführung handeln, in der die Portale in die Leiter integriert sind oder umgekehrt. Eine solche Lösung kann in Verbindung mit Leitern von Vorteil sein, welche wie die Fahrprofile aus Abschnitten zusammengesetzt sind. Die Portale können dann an den Stirnflächen der Leiterenden montiert sein oder zwischen Leiterabschnitten angeordnet sein.

Die Portale bestehen aus Stelzen und einer Traverse.

Nach der Erfindung kann die Leiter auch unmittelbar mit Stelzen versehen sein, die gleich den Stelzen der oben beschriebenen Portale sein können.. Dann bildet die Leiter die Traverse zwischen den Stelzen und kann die Verwendung von bekannten Portalen entbehrlich werden.

In der Ausführung einer mit Leitern versehen Stelze, wie auch in der Ausführung von Portalen zwischen den Abschnitten der Leiter, wie auch in der Ausführung mit den Portalen, die an den Stirnseiten der Leiterenden befestigt sind, können hinsichtlich der Energieketten die gleichen Verhältnisse wie bei den oben beschriebenen Ausführungen erreicht werden. Das gilt insbesondere mit den Fahrprofilen für den Düsenstock, die unter den Leitern bzw. unter der Traverse der Portale angeordnet sind.

In anderen Ausführungen sind die Seitenwangen der Leitern am oberen und/oder unteren Ende verkröpft bzw. abgewinkelt, so daß entweder verkürzte Stelzen Anwendung finden können oder ganz entfallen können, weil sich der Abstand der Seitenwangen zu dem Fahrprofil bzw. zu dem Kühlregister und den Kühlrohren verringert hat. Der Zwischenraum zwischen den abgewinkelten Seitenwangen der Leiter ist vorzugsweise zumindest teilweise frei von den Leitertritten/Leitersprossen, so daß der Düsenstock bei Bedarf durch das Ende der Leiter hindurch über die ganze zu reinigenden Kühlregisterfläche verfahren werden kann.

In weiteren Ausführungen stützt sich die Reinigungsvorrichtung an einem oder beiden Enden unmittelbar an den Zuführungsleitungen bzw. aufgebenden Leitungen oder abführenden Leitungen des Kühlregisters ab. Üblicherweise münden die Kühlrohre eines Kühlregisters in diese Leitungen, so daß die zu kühlenden Medien aus den Zuführungsleitungen in die Kühlrohre aufgegeben werden können und die gekühlten Medien bei Verlassen der Kühlrohr von der abführenden Leitung aufgenommen werden können. Wenn das zu kühlende Medium ein Kühlmittel, zum Beispiel Wasser in der Form von Dampf ist, wird das Kühlmittel dem Kühlkreislauf wieder zugeführt. Bei Wasser als Kühlmittel und daraus entstandenem Dampf wird das durch Abkühlen des Dampfes anfallende Wasser in den Kühlkreislauf zurückgeführt. In anderen Anwendungen des Kühlregisters kann das zu kühlende Medium an anderes Gas als Dampf sein. Es kann sich auch um ein anderes flüssiges Medium als Wasser handeln.

Dabei kann das Kühlregister gleichfalls innerhalb eines Kühlkreises angeordnet sein oder Teil einer offenen Prozeßkette sein. Bei der Aufarbeitung von Rohstoffen zu weiterzuleitenden Zwischenprodukten oder Endprodukten kann von einer offenen Prozeßkette gesprochen werden.

Die Zuführungsleitungen wie auch die abführenden Leitungen können in bzw. unter dem Rahmen des Kühlregisters angeordnet sein. Die Zuführungsleitungen wie auch die abführenden Leitungen können auch frei liegen und ausreichende Festigkeit besitzen, um eine Reinigungsvorrichtung unmittelbar oder mittelbar über ein Fahrprofil/Laufschiene zu tragen. Dabei sind sowohl die oben beschriebenen tragbaren Reinigungsvorrichtungen wie auch die stationären Reinigungsvorrichtungen anwendbar.

Der anlagenseitige Schlauch für die Wasserzuführung zur Reinigungsvorrichtung kann mit einer liegenden oder stehenden Energiekette verwirklicht werden. Das ist von Vorteil, wenn zwei Kühlregister wie geneigte Dächer aneinander stoßen. Dann wird auch von Kühldächern gesprochen. Zwischen den Kühldächern besteht üblicherweise ein Gang. Dort ist regelmäßig Raum für die Anordnung der Schlauchleitung mit oben geschlossener Energiekette. Je höher der Gang dort angelegt wird, desto mehr Breite steht für den Gang zur Verfügung.

Vorteilhaft ist, wenn die Energiekette mindestens einseitig seitlich auf dem Gang geführt ist. Besser sind Führungen an beiden Seiten. Die Führungen können aus profilierten Blechen bestehen.

Vorteilhaft ist auch, wenn der Gang zwischen den Kühldächern so breit ist, daß neben oder beiderseits der oben geschlossenen Energiekette mit der Schlauchleitung noch ein Gehweg besteht. Aus Gründen der Arbeitssicherheit ist der Gehweg vorzugsweise mit einem Rost versehen, der bündig mit der auf dem Gang aufliegenden Energiekette abschließt. Bei aufliegender, oben geschlossener Energiekette ergibt sich mit den bündig angeordneten Rosten ein ebener Weg, der leicht und sicher zu begehen ist.

Ferner ist von Vorteil, den Gang zwischen den Kühldächern von der Seite der Wasserzuführung zur Reinigungsvorrichtung aus zu begehen. Dann findet sich bis zu den Reinigungsvorrichtungen immer ein leicht und sicher zu begehender Weg.

Im Extremfall beschränkt sich die Breite des Ganges zwischen zwei Kühldächern auf die Breite der oben geschlossenen Energiekette. Dann ist der Gang allein über die Energiekette zu den Reinigungsvorrichtungen zu begehen.

Im Gang zwischen den Kühldächern wird vorzugsweise immer nur das eine Kühldach und anschließend das gegenüberliegende andere Kühldach gereinigt. Dazu sind eine Schlauchleitung und eine Pumpe ausreichend, die auf den Bedarf der Reinigungseinrichtung für ein Kühldach ausgelegt sind.

Bei stationären Reinigungsvorrichtungen an zwei einander gegenüberliegenden Kühldächern kann die vorhandene Schlauchleitung für die Wasserzuführung von der einen Reinigungsvorrichtung abgekoppelt und an die andere Reinigungsvorrichtung angeschlossen werden kann.

Bei mobilen Reinigungsvorrichtung, die nach Reinigen eines Kühldaches auf ein anderes Kühldach umgesetzt werden, kann die Schlauchleitung für die Wasserzuführung vor dem Umsetzen gleichfalls abgekoppelt und nach dem Umsetzen wieder angeschlossen werden. Um das Abkoppeln und Anschließen zu erleichtern, können Schnellschlußverbindungen Anwendung finden.

Es ist auch möglich mit einer Wasserzuleitung gemeinsam und gleichzeitig beide, einander gegenüberliegende Kühldächer zu reinigen. Dann ist eine gemeinsame Horizontalbewegung der Reinigungsbewegung beider Kühldächer vorgesehen und kann eine Verzweigung am Ende der Wasserzuleitung für die gleichzeitige Wasserversorgung beider Reinigungsvorrichtungen ausreichend sein.

Desgleichen ist es möglich, bei gewünschter gleichzeitiger und unabhängiger Reinigung von einander gegenüberliegenden Kühldächern, jede Reinigungsvorrichtung aus einer separaten Schlauchleitung mit Reinigungsmittel zu beaufschlagen.

Soweit eine Kühlanlage ohne ein gegenüberliegendes Kühldach endet, ist die Ausbildung des Ganges am Fuß des Kühldaches zusätzlichem Gehweg unproblematisch.

Wahlweise wird die Energiekette mit der darin eingeschlossenen Schlauchleitung für die Zuführung von Reinigungsmittel zur Reinigungsvorrichtung auf dem Gang zwischen den einander gegenüberliegenden Kühldächern angordnet. Dabei ist trotz der Stabilität der Energiekette von Vorteil, die Energiekette zu führen. Als Führung sind dabei besonders Führungsbleche geeignet. Die Bleche können mit einem Fuß auf dem Gang zwischen den einander gegenüberliegenden Kühldächern befestigt werden. Der Fuß kann durch die Bleche selbst gebildet werden oder ein separates Bauteil sein.

In der Zeichnung ist die Erfindung anhand der Vorrichtung dargestellt, die aus der EP1604164 bekannt ist.

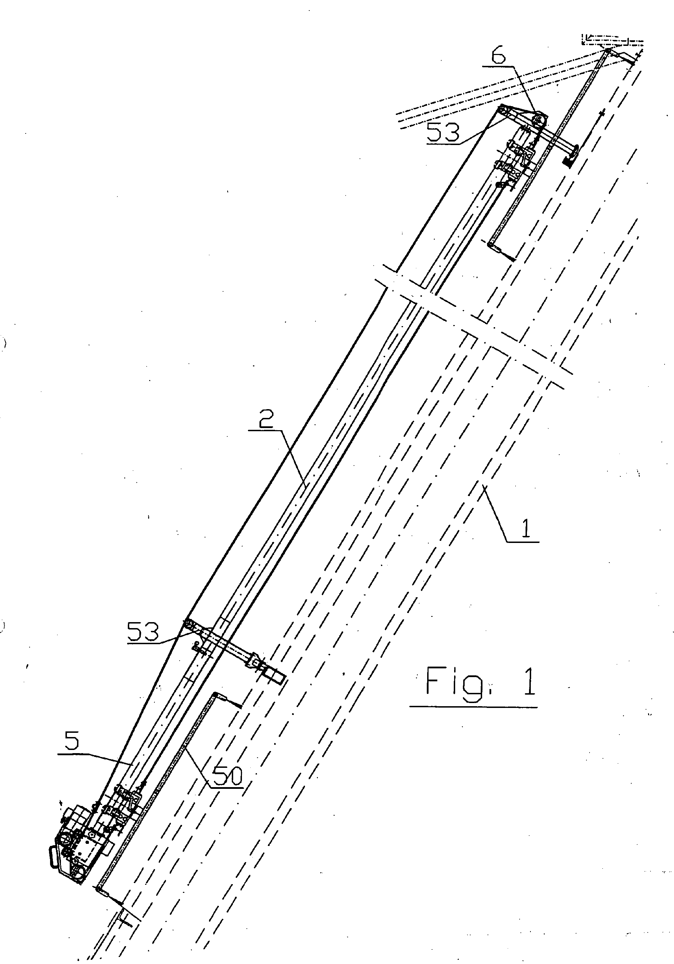

Fig. 1 zeigt eine erfindungsgemäße Reinigungsvorrichtung für geneigte Kühlflächen mit Kühlregister 1.

Zu der Reinigungsvorrichtung gehört ein Gestänge mit einem auswechselbaren Vierkantrohr 2 als Fahrprofil für den Düsenstock. Der Düsenstock verfährt auf dem Vierkantrohr in der Vorrichtung. Das Rohr 2 hat eine Kantenlänge von 50 mm bei 2,5mm Wandstärke. An dem in der Zeichnung linken Ende ist das Rohr 2 mit einem Fußteil 5 und an dem in der Zeichnung rechten Ende mit einem Kopfteil 6 verbunden.

Ferner ist in allen Vorrichtungen das Rohr 2 zur Anpassung an den jeweiligen Kühler auswechselbar. Dazu sind zwischen dem Rohr 2 und Kopf 6 und Fuß 5 Steckverbindungen vorgesehen. Die Anschlußstellen am Kopfteil 6 und Fußteil 5 werden durch rohrförmige Zapfen gebildet, die in das Rohr 2 greifen. Entsprechend dem Innenmaß des Rohres 2 von 45 mm Kantenlänge wird ein Zapfen mit geringfügig kleinerem Außenmaß verwendet.

Das Rohr 2 wird mit dem Kopfteil 6 und dem Fußteil 5 in Bügel 53 gehalten.

Die Bügel 53 besitzen kühlregisterseitig Laufrollen, mit denen sie bei geneigtem Kühlregister in einem weiteren Fahrprofil laufen. Im Unterschied zu dem Fahrprofil für den Düsenstock, das in der Reinigungsvorrichtung gehalten ist, sind die weiteren Fahrprofile an dem Kühlregister befestigt. Die Fahrprofile nehmen die Vertikalkräfte auf, welche bei geneigter Anordnung der Kühlregister aus der dadurch bedingten Neigung der Reinigungsvorrichtung entstehen..

Bei horizontal angeordnetem Kühlregister fallen Vertikalkräfte nicht an. Gleichwohl kann an den Fahrprofilen aus Gründen der Führung für die Reinigungsvorrichtung festgehalten werden. In anderen Ausführungsbeispielen können die Laufrollen entfallen und kann die Reinigungsvorrichtung unmittelbar auf dem Kühlregister laufen. Dabei besteht die Möglichkeit, daß die Reinigungsvorrichtung auf den Randprofilen des Kühlregisters läuft. In einigen Ausführungsbeispielen ist die Belastung durch die Reinigungsvorrichtung so gering, daß die Reinigungsvorrichtung unmittelbar auf den Kühlrohren, d.h. unmittelbar auf den Kühlrippen der Kühlrohre laufen.

Das Rohr 2 trägt einen verfahrbaren Düsenstock 50, der in Fig. 1 in einer oberen Stellung und einer unteren Stellung dargestellt ist. Aufgrund seiner Verfahrbarkeit kann der Düsenstück als Düsenstockwagen bezeichnet werden. Der Düsenstockwagen wird von dem Rohr 2 und den Portalen 53 getragen. Aufgrund der Verfahrbarkeit des Rohres 2 mit den Portalen 53 kann dieser Teil der Vorrichtung als Tragwagen bezeichnet werden.

Der Düsenstock besteht aus einem Rohrgestänge, das aus quer und längs zur den Kühlrohren im Kühlregister 1 verlaufenden Rohren besteht. In den quer verlaufenden Rohren sitzen Düsen, mit denen Reinigungswasser gegen die Kühlrohre gespritzt werden kann. Die längs zu den Kühlrohren verlaufenden Rohre des Düsenstockes versorgen die quer verlaufenden Rohre mit Wasser.

Die Wasserzuführung erfolgt über eine nicht dargestellte, mitgeführte Schlauchleitung und eine zwischengeschaltete und separat aufgestellte Pumpe.

Der Düsenstock 50 ist mit verschiedenen Rollen 55 auf dem Rohr 2 verfahrbar gehalten. Die verschiedenen Rollen laufen teilweise auf unterschiedlichen Flächen des Vierkantrohres. Das bewirkt eine drehfeste Anordnung.

Darüber hinaus sind in Längsrichtung des Rohres mehre Rollen hintereinander angeordnet. Das verhindert eine Kippen des Düsenstockes 50.

Zur Bewegung des Düsenstockes dient ein Riementrieb.

Zu dem Riementrieb gehören ein Zahnriemen und verschiedene mitlaufende Führungsrollen, welche an den Bügeln 53 befestigt sind, sowie eine mitlaufende Führungsrolle am Kopfteil 6 und eine angetriebene Riemenrolle am Fußteil 5.

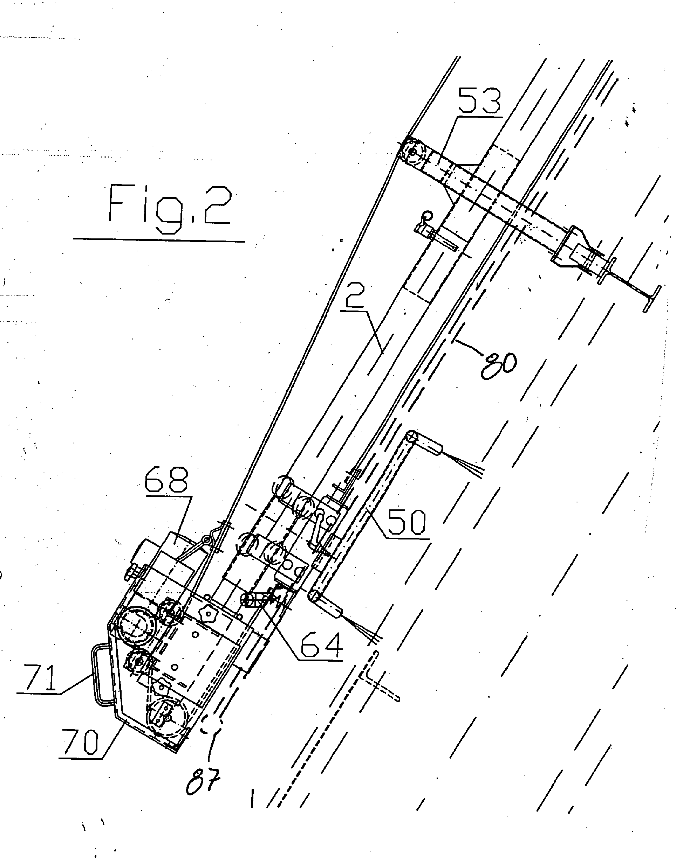

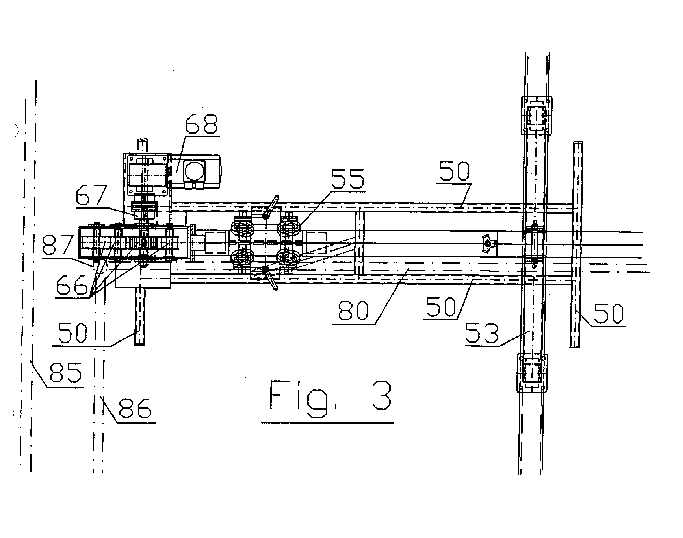

In Fig. 2 und 3 sind Details des Antriebes für den Riementrieb dargestellt Mit 66 sind mehrere Rollen des Antriebes bezeichnet, mit unterschiedlichen Funktionen, z.B. Umlenkfunktion und Spannfunktion und Antriebsfunktion. Die Antriebsrolle ist über eine Kupplung 67 mit einem Getriebemotor 68 verbunden. Der Getriebemotor 68 sitzt auf einer Konsole, welche seitlich an ein Gehäuse angeflanscht sind, in dem die Rollen 66 gelagert sind. Das Gehäuse bildet zugleich die Verbindung zu dem Rohr 2.

Mit 69 ist die Wasserzuführung zum Düsenstock 50 bezeichnet.

Das Gehäuse für die Lagerung der Rollen 66 ist oben offen, um eine gute Zugänglichkeit der Rollen 66 für die Auswechselung des Zahnriemes zu eröffnen. Aus Gründen der Arbeitssicherheit ist das Gehäuse mit einer Haube 70 abgedeckt. Die Haube 70 ist schwenkbar gelagert und kann von Hand an einem Bügel 71 bewegt werden. Der Bügel 71 kann zugleich genutzt werden, um die Reinigungsvorrichtung von Hand seitlich zu versetzen. Dabei ist zu unterscheiden zwischen einem seitlichen Versetzen auf einem Kühlregister und einem Versetzen von Kühlregister zu Kühlregister.

Üblicherweise beginnt die Reinigung eines Kühlregisters an einem Kühlregisterende.

Dabei wird der Düsenstock 50 solange hin- und hergehend bzw. auf und ab bewegt, bis eine aus ausreichende Reinigung entstanden ist. Der Düsenstock 50 erfaßt bei seiner Reinigungsbewegung allerdings nur einen Teil der Kühlrohre bzw. einen Teil des Kühlregisters. Nach Reinigung dieses Kühlregisterteiles wird die Reinigungsvorrichtung auf den sich anschließenden, noch verschmutzten Teil des Kühlregisters seitlich verschoben. Das kann von Hand an dem Bügel 71 unter Beachtung ausreichenden Gleichlaufes erfolgen.

In anderen Ausführungsbeispielen ist für die seitliche Verschiebung auf dem gleichen Kühlregister ein Kurbeltrieb oder ein andere Antrieb vorgesehen.

Nach der Reinigung eines ganzen Kühlregisters muß die Vorrichtung auf das nächste Kühlregister umgesetzt werden. Das erfolgt vorzugsweise von Hand, indem die Vorrichtung angehoben und auf das nächste Kühlregister getragen wird.

In erfindungsgemäßer Ausführung der Reinigungsvorrichtung wird der Getriebemotor vorher von der Konsole gelöst. Das verringert das Gewicht der Reinigungsvorrichtung beträchtlich und verbessert die Handhabungsmöglichkeit der Vorrichtung beim Umsetzen entsprechend. Nach Umsetzen der Vorrichtung auf das nächste Kühlregister wird der Getriebemotor wiedermontiert.

Die Kupplung 67 ist eine Zahnkupplung, wobei zwischen den Zähnen der beiden Kupplungshälften Federglieder 69 aus flexiblem Kunststoff vorgesehen sind, um die Wirkung geringfügiger Mängel des Fluchtens beider Kupplungshälften auszugleichen.

Fig. 2 und 3 zeigen in gestrichelter Darstellung die Führung des Reinigungswassers.

Dabei ist mit 85 und 86 eine anlagenseitige Wasserzuführung bezeichnet. Es handelt sich bie den Teilen 85 und 86 um Abschnitte bzw. Stränge einer Schlauchleitung Zu der Schlauchleitung gehört noch ein bogenförmiger Abschnitt bzw. Strang, der die beiden anderen Teil 85 und 86 miteinander verbinden.

Die anlagenseitige Wasserzuführung wird durch eine Schlauchleitung DN 25 gebildet. Die Schlauchleitung liegt in einer Energiekette. Die Energiekette steht senkrecht auf dem Gehsteig zwischen zwei Kühldächern. Die Energiekette führt die Schlauchleitung. Im Ausführungsbeispiel gehört zu jedem Schlauchabschnitt ein gleich langer (bezogen auf die Mittellinie) Energiekettenabschnitt.

Dabei ist ein idealisierter paralleler Verlauf des oberen Teiles 86 der Schlauchleitung zu dem Teil 85 der Schlauchleitung dargestellt. Der Teil 86 bildet in Bezug auf die umgebende Energiekette das sogenannte Obertrum der Kette. Der Teil 85 bildet in Bezug auf die Kette das sogenannte Untertrum. Der Teil 85 liegt auf dem Gehsteig auf und nimmt eine gerade, im Ausführungsbeispiel horizontale Lage ein.

Der Teil 86 der Schlauchleitung hängt im Ausführungsbeispiel in Wirklichkeit mehr oder weniger durch, d.h. nähert sich mit einem bogenförmigen Verlauf mehr oder weniger dem Teil 85. In einem anderen Ausführungsbeispiel ist vorgesehen, daß der Teil 85 sich baldmöglichst auf den Teil 86 legt. Dann gleiten zwar die Teile 85 und 86 aneinander. Gleichwohl kann das vorteilhaft sein, weil auf dem Wege erhebliche Spannungen in dem Teil 86 verhindert werden. Das Ablegen des Teiles 86 auf dem Teil 85 wird durch entsprechende Beweglichkeit der Kettenglieder erreicht. Die Schlauchleitung ist ohnehin flexibel.

Außerdem gehen die beiden Teile/Schlauch- und Kettenabschnitte 85 und 86 an dem nicht dargestellten Ende in einem Bogen ineinander über. Der Bogen hat einen Mindestkrümmungsradius, der verhindert, daß der zugehörige Schlauchabschnitt durch übermäßige Krümmung übermäßig belastet wird.

In dem genannten weiteren Ausführungsbeispiel mit sich auf dem Untertrum ablegendem Obertrum ist gleichfalls durch eine beschränkte Beweglichkeit der Kette gesichert, daß der zugehörige Schlauchabschnitt nicht durch übermäßige Krümmung übermäßig belastet wird.

Beide Teile 85 und 86 erfahren beim Verfahren der Reinigungsvorrichtung in horizontaler Richtung eine Längenänderung. In der einen Fahrtrichtung wird das Teil 86 länger und das Teil 85 kürzer. Dabei folgt der nicht dargestellte Bogen der Reinigungsvorrichtung mit größer werdendem Abstand.

In umgekehrter Fahrtrichtung wird das Teil 86 kürzer und das Teil 85 länger, während der nicht dargestellte Bogen vor der Reinigungsvorrichtung mit geringer werdendem Abstand läuft..

In anderen Ausführungsbeispielen ist anstelle einer stehenden, anlagenseitigen Schlauch- und Energiekette eine liegende anlagenseitige Schlauch- und Energiekette vorgesehen. Während die stehende Energiekette in ihrer Bogenbildung nicht von den Abmessungen des Steges zwischen zwei Kühldächern abhängt, ist eine liegende Energiekette hinsichtlich ihrer Bogenbildung von der Stegkette abhängig.

Der Anschluß der anlagenseitige Schlauchleitung an die Reinigungsvorrichtung erfolgt bei 87. Von dort geht eine Schlauchleitung 80, 81 aus, die im Ausführungsbeispiel gleichfalls als DN 25 ausgeführt ist. Im Ausführungsbeispiel verlaufen beide

Teile/Schlauchleitungsabschnitte/Schlauchleitungsstränge entsprechend der Neigung des Kühldaches/Kühlregisters 1 geneigt zur Horizontalen des

Schlauchleitungsteils/Abschnitt/Stranges 85.

Der Schlauchleitungsteil/Abschnitt/Strang 81 mündet an einem Anschluß 82 des Düsenstockes 50

Beide Teile 80 und 81 sind an dem in Fig. 3 nicht dargestellten Ende durch einen Bogen miteinander verbunden. Der verbindende Bogen bildet gleichfalls einen Schlauchabschnitt/Strang.

Die Schlauchleitung mit den Teilen/Abschnitten/Strängen 80 und 81 liegt wie die Schlauchleitung mit den Teilen 85 und 86 in einer umgebenden und schützenden Energiekette, die zugleich eine Führung für die Schlauchleitung bildet und verhindert, daß die Tiele 80 und 81 durch übermäßige Krümmung eine übermäßige Belastung erfahren.

Beide Teile 80 und 81 erfahren beim Verfahren des Düsenstockes 50 eine Längenänderung. In der einen Fahrtrichtung das Teil 80 kürzer und das Teil 81 länger, während der nicht dargestellte Bogen dem Düsenstock mit größer werdendem Abstand folgt. In der umgekehrten Fahrtrichtung des Düsenstockes 50 wird die Schlauchleitung 81 kürzer, während die Schlauchleitung 80 länger wird, während der nicht dargestellte Bogen dem Düsenstock mit geringer werdendem Abstand vorausläuft.

Die beiden Schlauchleitungsteile 80,81 werden durch die Energieketten in einem Raum geführt,
der oberhalb des Düsenstockes 50,
der zugleich oberhalb (in anderen Ausführungsbeispielen unterhalb) des Untertrums des zugehörigen Riementriebes oder Seilantriebes oder Kettentriebes liegt,
aber unterhalb des Fahrprofiles 2 und
zugleich beiderseits der Verbindung des Düsenstockes mit seiner Führung auf dem Fahrprofil liegt.

Der Abstand beider Teile 80 und 81 von der genannten Verbindung ist so groß gewählt, daß der Düsenstock 50 sich mit seiner Verbindung zu seiner Führung auf dem Fahrprofil 2 frei zwischen den Teilen 80 und 81 und den zugehörigen Energieketten bewegen kann.

Der Bogen zwischen den Teilen 80 und 81 liegt in der in Fig. 1 dargestellten oberen Endstellung in dem freien Raum 90 zwischen dem oberen Portal 6 und der Führung und Aufhängung des Düsenstockes 50. Dabei ist die Begrenzung durch das Portal deshalb gegeben, weil die Durchgangsöffnung zwischen den Stelzen des Portales kleiner als der Bogen zwischen den Teilen 80 und 81 ist. In anderen Ausführungsbeispielen ist die Durchgangsöffnung zwischen den Stelzen größer, so daß die Schlauch- und Energiekette zwischen den Stelzen hindurchbewegt werden kann. Die weitergehende Bewegung der Schlauchleitung und Energiekette findet dann aus anderen Gründen eine Grenze. Die Grenze kann durch die Länge der verwendeten Schlauchleitung und Energiekette gegeben sein. Spätestens endet die Bewegung, wenn der Bogen auf Hindernisse stößt. Ein solches Hindernis kann der Riemen des Antriebes sein, wenn das Untertrum des Antriebes unterhalb der Schlauchleitung und Energiekette verläuft. Üblicherweise ist der Riemen mittig an der Vorrichtung angeordnet und die Enden des Fahrprofiles herumgeführt.

In anderen Ausführungsbeispielen ist dort anstelle des Riemens eine Kette oder ein Seil des Antriebes vorgesehen..

Im Ausführungsbeispiel ist die Öffnungsweite zwischen den Stelzen zu gering. Deshalb hängt die Anordnung des Portals 6 im Ausführungsbeispiel davon ab, daß mit dem Düsenstock die gesamte zu reinigende Fläche des Kühlregisters erreicht werden kann.

In anderen Ausführungsbeispielen mit geringeren Abmessungen des Düsenstockes ist das Portal näher am Rand der zu reinigenden Kühlregisterfläche angeordnet. Wenn der Düsenstock nicht zumindest mit seinen Reinigungsstrahlen in einem für die Reinigung ausreichenden Umfang unter die Öffnung des Portals greifen kann, ist das Portal ganz oder teilweise außerhalb der zu reinigenden Kühlregisterfläche angeordnet.

In anderen Ausführungsbeispielen liegt die Position des Portales fest und wird der Düsenstock in eine Form gebracht, bei der der Düsenstock zumindest mit seinen Reinigungsstrahlen in einem für die Reinigung ausreichenden Umfang unter die Öffnung des Portales bis zum Rand der zu reinigenden Kühlregisterfläche greift.

In noch anderen Ausführungsbeispielen ist die Position des Portales und die Form des Düsenstockes so verändernt, daß der Düsenstück zumindest mit seinen Reinigungsstrahlen in einem für die Reinigung ausreichendem Umfang unter die Öffnung des Portales bis zum Rand der zu reinigenden Kühlregisterfläche greift.

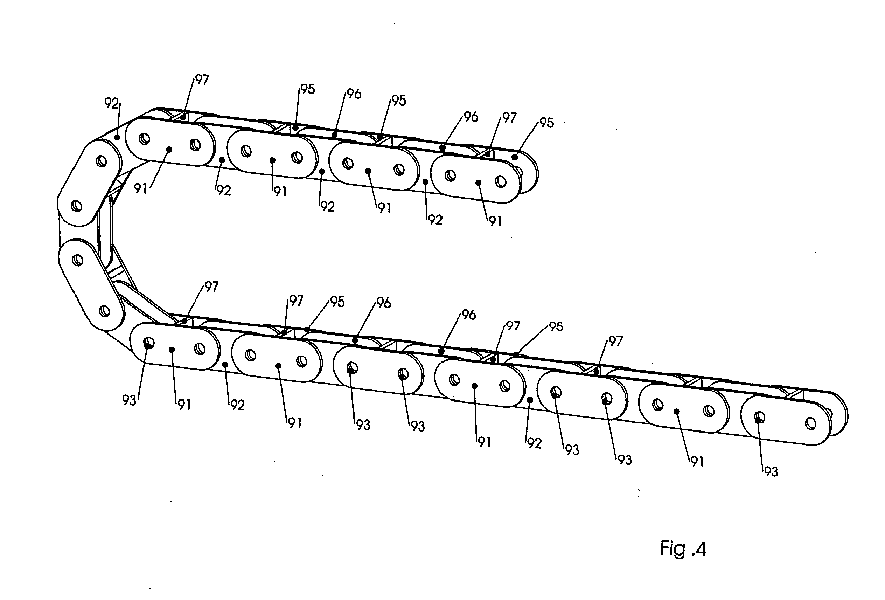

Fig. 4 zeigt die Einzelheiten einer Energiekette.

Die Energiekette besteht im Ausführungsbeispiel aus zwei Reihen Laschen.

Die eine Reihe besteht aus Laschen 91 und 92, welche durch kurze Bolzen 93 gelenkig verbunden sind. Die Bolzen 93 sind durch kurze Sprengringe auf den Bolzen gesichert.

Die andere Reihe besteht aus Laschen 95 und 96, welche in gleicher Weise wie die Laschen 91 und 92 durch Bolzen gelenkig verbunden.

Die Laschen 91 und 95 sind durch Stege 97 miteinander verbunden.

Die Stege 97 sind fest mit den Laschen 91 und 95 verbunden.

An der gegenüberliegenden Seiten der Kette sind im Ausführungsbeispiel lösbare und wiederbefestigbare Stege vorgesehen. Das erleichtert das Einlegen der Schlauchleitung in den Hohlraum der Energiekette. Der Hohlraum wird begrenzt durch die beiden Laschenreihen und die Stege.

Fig. 4 zeigt, daß die Energiekette einen Bogen bildet. Der Bogen wird durch eine Begrenzung des Schwenkbewegung der Laschen bestimmt. Im Ausführungsbeispiel ist die Schwenkbewegung auf einen Krümmungsradius von 300 mm beschränkt. Geringere Krümmungsradien werden durch nicht dargestellte Anschläge an den Laschen verhindert. Im Ausführungsbeispiel entsprechen diese Krümmungsradien der maximalen Belastbarkeit der verwendeten Schlauchleitungen durch Krümmung. Bei anderen Schlauchleitungen wird die Krümmung der Energiekette der Belastbarkeit der Schlauchleitungen angepasst.

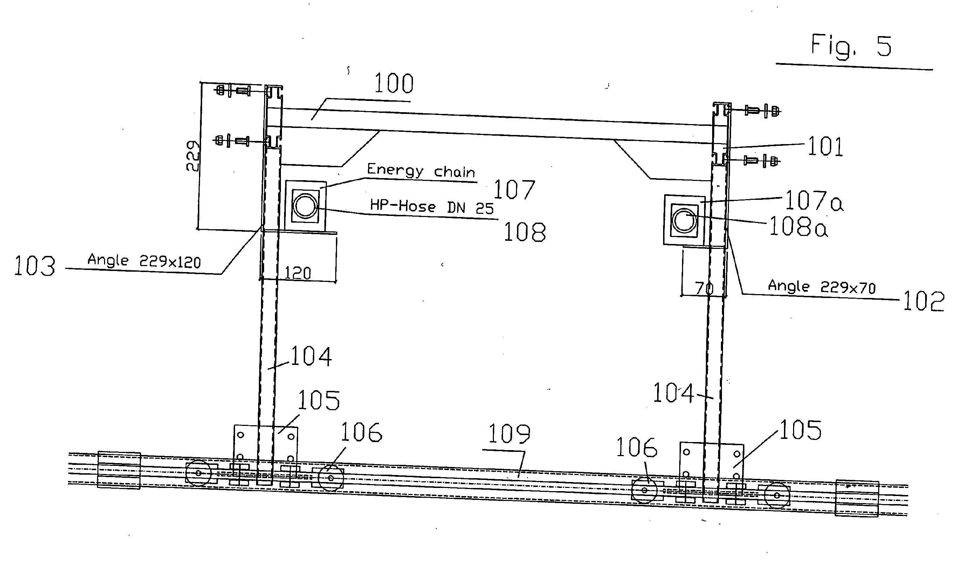

Fig. 5 bis 7 zeigen die Anwendung einer erfindungsgemäßen Energiekette auf eine stationäre Reinigungsvorrichtung mit einer Leiter, bestehend aus Seitenwangen 101 und Leitersprossen 100

An einer Stelle der Leiter, an der an vergleichbaren, oben beschriebenen mobilen Reinigungsvorrichtungen ein Portal vorgesehen ist, findet sich unterhalb der zugehörigen Leitersprosse 100 eine Halterung 110. Die Halterung 110 ist durch Ablängen eines Rohres mit quadratischem Querschnitt entstanden. In anderen Ausführungsbeispielen ist ein anderes Rohr mit anderem Querschnitt vorgesehen. Der quadratische oder rechteckige Querschnitt bietet eine lange Seitenfläche, mit der es an der Leitersprosse 110 verschweißt werden kann. Wie bei den oben angesprochenen Schweißvorgängen bedingt das Verschweißen verschweißbare Werkstoffe an den Schweißflächen.

Die Halterung hat im Ausführungsbeispiel folgende Funktionen
a)Befestigung des Fahrprofils 113. Das Fahrprofil ist ein oben beschriebenes Vierkanthohlprofil. Die Befestigung erfolgt über einen schmalen Verbindungssteg, dessen Breite im Ausführungsbeispiel gleich der Länge des Rohrabschnittes der Halterung 110 ist. Auf dem Fahrprofil 113 läuft der Düsenstock 112 mit einer Rollenführung 113. Der Düsenstock 112 hat im Ausführungsbeispiel gleiche Form und Funktion wie der Düsenstock des in Fig. 1 bis 3 gezeigten Düsenstockes.
b)Lagerung für eine Riemenrolle 111. In der Halterung ist die Riemenrolle 111 mit Achsen drehbeweglich gelagert. Die Riemenrolle gehört zu einem Riementrieb, wie er in Fig. 1 bis 3 beschrieben ist. Allerdings wird der obere Teil(Obertrum) des Riemens unterhalb der Leiter durch die Halterung geführt. Mit dem Riementrieb wird der Düsenstock 112 auf dem Fahrprofil 113 hin- und hergehend bewegt.

Fig. 5 zeigt, daß die Leiter mit den Seitenwagen 101 und den Leitersprossen 100 von Stelzen 104 getragen wird, die Stelzen 104 sind im Ausführungsbeispiel mit den Seitenwangen 101 verschweißt. Dabei sichern Versteifungsbleche 120 die ausreichende Festigkeit der Konstruktion. Die Stelzen 104 sind im Ausführungsbeispiel auch an der gleichen Leitersprosse 100 befestigt, welche auch die Halterung 110 trägt. Aus zeichnerischen Gründen ist das in Fig. 5 nicht dargestellt.

In anderen Ausführungsbeispielen sind die Stelzen 104 mit einer anderen Leitersprosse verschweißt als die Halterung 110. Das kann vorteilhafte Variationen eröffnen.

Die Stelzen 104 enden unten in Führungsteilen 105, an denen sich rollen 106 befinden.

Die Vorrichtung kann mit den Rollen 106 seitlich in Führungsprofilen 109 verfahren werden. Dies erfolgt nach ausreichender Reinigung einer Teilfläche des Kühlregisters. Die Reinigung erfolgt durch hin- und hergehende Bewegung des Düsenstockes auf dem Fahrprofil unter gleichzeitiger Beaufschlagung der zu reinigenden Kühlregisterfläche mit Druckwasser.

In den Fig. 5 bis 7 sind noch L-förmige Winkelprofile 101 und 102 dargestellt. Diese Winkelprofile 101 und 102 sind an den Seitenwangen 101 der Leiter verschraubt. Die Winkelprofile 101 und 102 besitzen in der Ansicht unterschiedlich lange untere Schenkel, mit denen sie die Energiekette an der einen Seite der Vorrichtung mindestens zur Hälfte unterfassen und an der anderen Seite der Vorrichtung mindestens ganz unterfassen.

Die Winkelprofile 101 und 102 tragen eine Schlauchleitung DN 25, welche der Versorgung des Düsenstockes mit Wasser dient. Die Schlauchleitung ist dabei von einer Energiekette umschlossen. Die Energiekette und die L-förmigen Winkelprofile bilden für die liegende Schlauchleitung eine Führung. Dabei verhindert die Energiekette nicht nur eine übermäßige Krümmung der Schlauchleitung. Die übermäßige Krümmung hätte eine übermäßige Belastung der Schlauchleitung und die Gefahr zur Folge, daß die Schlauchleitung zwischen den L-förmigen Winkelprofilen aufgrund entsprechend geringer Abmessungen nach unten durchfallen. Im Ausführungsbeispiel soll der Krümmungsradius von 300 mm nicht unterschritten werden. Wie bei den anderen angesprochenen Krümmungsradien bezieht sich der Krümmungsradius auf die Mittellinie der Schlauchleitung.

Die Energiekette verhindert auch eine wesentliche Durchbiegung der Schlauchleitung aus Ebene, in der die Schlauchleitung liegt. Die Energiekette stützt die Schlauchleitung, weil die Nachgiebigkeit der Schlauchleitung in dieser Richtung aufgrund der geringen Bogenlänge gering ist.

Zugleich bildet die Energiekette mit der eingeschlossenen Schlauchleitung bei der hin- und hergehenden Reinigungsbewegung des Düsenstockes immer einen Eingriff der sich abwickelnden Kettenstränge mit den Winkelprofilen 101 und 102. Das wird auf die Steifigkeit des Systems, insbesondere der unter Reinigungsdruck stehenden Schlauchleitungen, zurückgeführt.

Die Energiekette schützt die Schlauchleitung im Übrigen vor mechanischen Einwirkungen.

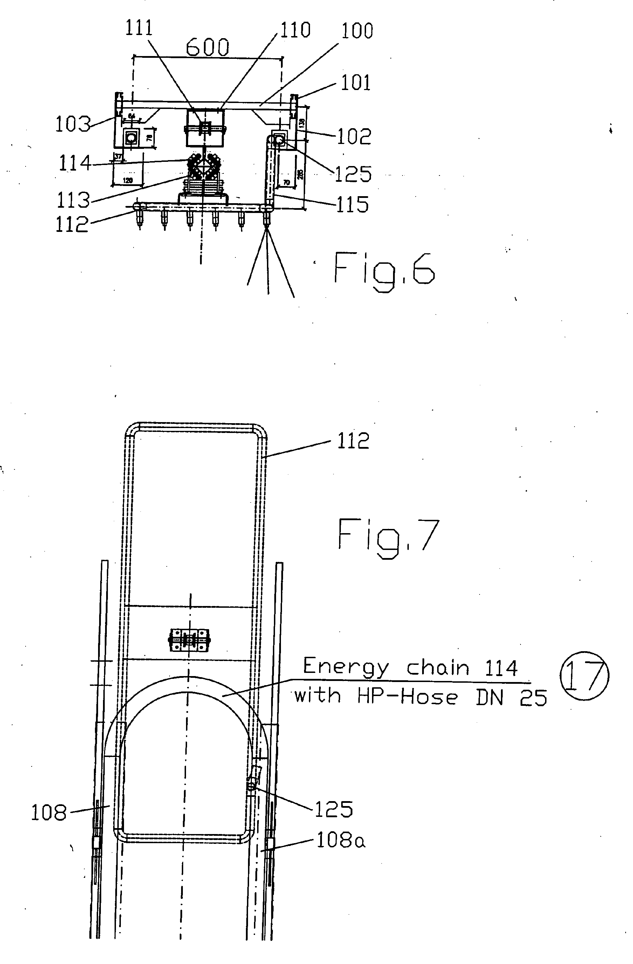

Die Fig. 7 zeigt den Verlauf der Schlauchleitung und Energiekette in einer Draufsicht und in einer oberen Endstellung des Düsenstockes. Dabei gliedert sich die Schlauchleitung und Energiekette in einen Strang/Abschnitt/Teil 108, einen Bogen/Abschnitt/Teil 114 und einen Strang/Abschnitt/Teil 108a. Die Stränge 108, und 108a verändern ihre Länge mit der Rückkehr des Düsensstockes aus der dargestellten Endstellung in die Ausgangslage. Dadurch wird der Strang 108 kürzer und der Strang 108a länger. Der Bogen läuft dem Düsenstock mit zunehmendem Abstand nach.

Nach Erreichen der Ausgangslage und Umkehrung der Bewegung des Düsenstockes kehrt sich auch die Längenbildung an den Strängen 108 und 108a um.

Im Ausführungsbeispiel ist der Abstand der Stelzen 104 so groß, daß der Bogen 114 zwischen den Stelzen 104 hindurchbewegt werden kann. Die L-förmigen Winkelprofile 102 und 103 besitzen eine ausreichende Länge für eine solche vorgesehene Bewegung.

Fig. 7 zeigt überdies ein Verbindungsrohr 115 an dem Düsenstock 112, das bei 125 mit der Schlauchleitung in der Energiekette verbunden ist.

In stationärer Auführung der Vorrichtung nach den Fig. 5 bis 7 ist eine Längenänderung der Schlauchleitung und Energiekette nicht vorgesehen.

In Anwendung auf eine mobile Vorrichtung, die von Einsatzort zu Einsatzort transportiert wird kann eine abschnittsweise Längenänderung der Vorrichtung zur Anpassung an die jeweiligen Abmessungen der Kühlregister von Vorteil sein.

In dem Fall ist vorgesehen, daß die Schlauchleitung und Energiekette um gleiche lange Abschnitte einkürzbar und verlängerbar ist.

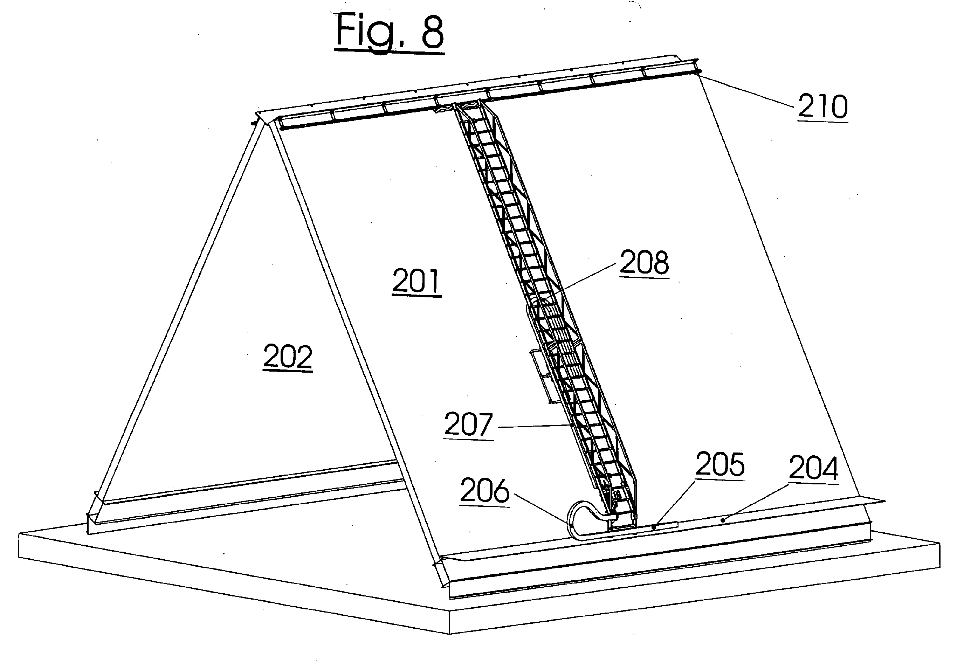

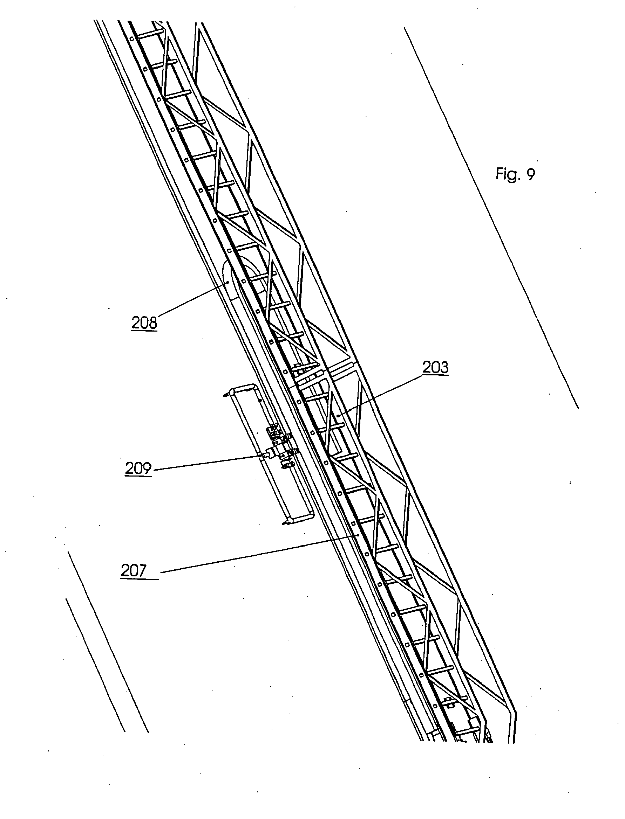

Die Fig. 8 bis 10 beinhalten eine schematische Darstellung der Kühlwasserzuführung mit Schlauchleitung und Energiekette. Dabei sind mit 201 und 202 zwei geneigt angeordnete Kühldächer bezeichnet. Die Kühldächer bestehen aus Kühlregistern wie in den anderen Ausführungsbeispielen. Auf jedem Kühldach 201 und 202 ist eine Reinigungsvorrichtung 203 horizontal verfahrbar angeordnet, d.h. in der Zeichnungsebene nach rechts und links.

Das obere Ende/Kopf der Reinigungsvorrichtung 203 besitzt Führungsrollen, mit denen der Kopf der Reinigungsvorrichtung in Führungsschienen 210 läuft.

Das untere Ende/Fuß der Reinigungsvorrichtung besitzt Führungsrollen, mit denen der Fuß der Reinigungsvorrichtung in Führungsschienen 204 läuft.

Die Reinigungsvorrichtung 203besitzt in dem Ausführungsbeispiel einen nach oben offenen, U-förmigen Querschnitt, wobei die Traverse durch eine Leiter und die nach oben weisenden Schenkel durch Bügel/Geländer gebildet werden. Unter der Leiter ist in nicht dargestellter Form ein Düsenstock 209 in Längsrichtung der Leiter verschiebbar angeordnet.

Als Reinigungsmittel dient Wasser, das über eine Zuführungs-Schlauchleitung 205 der Reinigungsvorrichtung 203 zugeführt wird. Dabei macht die Schlauchleitung in der dargestellten Position der Reinigungsvorrichtung 203 einen Bogen 206. Die Schlauchleitung ist in einer Energiekette gehalten, wie sie in Fig. 4 dargestellt und beschrieben ist.

Der Bogen 206 entsteht, weil die Schlauchleitung 205 eine solche Länge hat, daß sie in der durch Verfahren der Reinigungsvorrichtung nach links in der äußersten Stellung der Reinigungsvorrichtung immer noch bis an den Wasseranschluß der Reinigungsvorrichtung 203 reicht. Beim Verfahren nach rechts wird das der Reinigungsvorrichtung zugewandte Ende der Schlauchleitung von der Schlauchleitung nach rechts gezogen. Dem kann die Schlauchleitung nur unter Bildung des Bogens 206 folgen. Das Maß des Bogens 206 wird durch die Energiekette bestimmt, mit der die Schlauchleitung geführt ist.

Am Fuß der Reinigungsvorrichtung 203 geht die Schlauchleitung 205 in die Schlauchleitung 207 für die Weiterleitung des Wassers zu dem Düsenstock 209 über.

Die Schlauchleitung 207 ist wie die Schlauchleitung 205 mit einer Energiekette geführt.

Die Länge der Schlauchleitung 207 ist so bemessen, daß die Schlauchleitung 207 nach Verfahren der Reinigungsvorrichtung in die oberste Stellung noch bis an den Düsenstock 209 ragt.

Die Schlauchleitung 207 ist wie die Schlauchleitung 205 in einem Bogen 208 geführt. Während der Bogen 206 senkrecht auf der Auflagefläche der Energiekette steht, hat der Bogen 208 in Bezug auf seine nicht dargestellte Auflagefläche in der Reinigungsvorrichtung eine liegende Anordnung. Diese nicht dargestellte Auflagefläche verläuft im Ausführungsbeispiel parallel zu der Fläche des zugehörigen Kühldaches 201.

In der dargestellten Position ist der Düsenstock wieder ein Stück nach unten gefahren worden. Dabei hat der Düsenstock das dem Düsenstock zugewandte Ende der Schlauchleitung 207 mitgenommen.

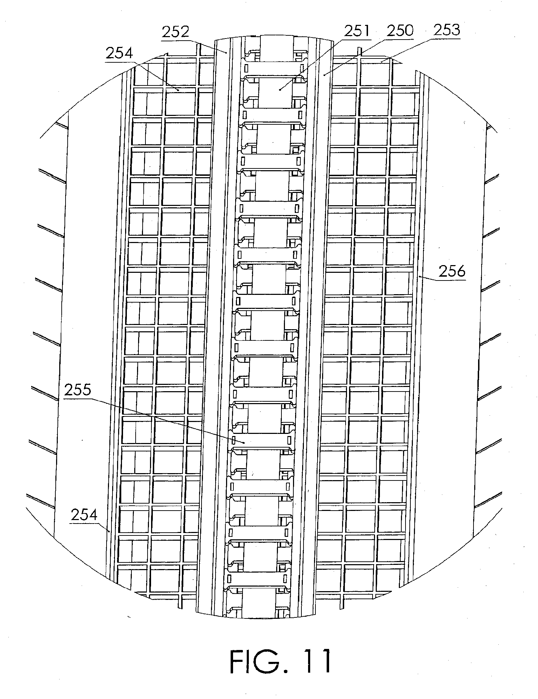

Fig. 11 zeigt einen Gang zwischen zwei einander gegenüberliegenden und geneigten Kühldächern. Der Gang ist mit Rosten 253 und 254 ausgelegt. Auf den Rosten sind Führungsschienen 250 und 252 montiert. Zwischen den Führungsschienen 250 und 252 ist eine Schlauchleitung 251 angeordnet, die von einer Energiekette 255 umschlossen ist. Die Schlauchleitung 251 ist Die Roste werden durch Rahmen 254 und 256 gehalten. Die Roste 253 und 254 liegen in dem Ausführungsbeispiel in einer Ebene. Die Oberseite der Energiekette 255 liegt im Ausführungsbeispiel in einer anderen Ebene.

In anderen Ausführungsbeispielen ist vorgesehen, daß alle in den Gang nach oben ragenden Teile bündig miteinander abschließen, so daß eine gemeinsame Trittfläche entsteht, die leicht und sicher von dem Reinigungspersonal betreten werden kann.

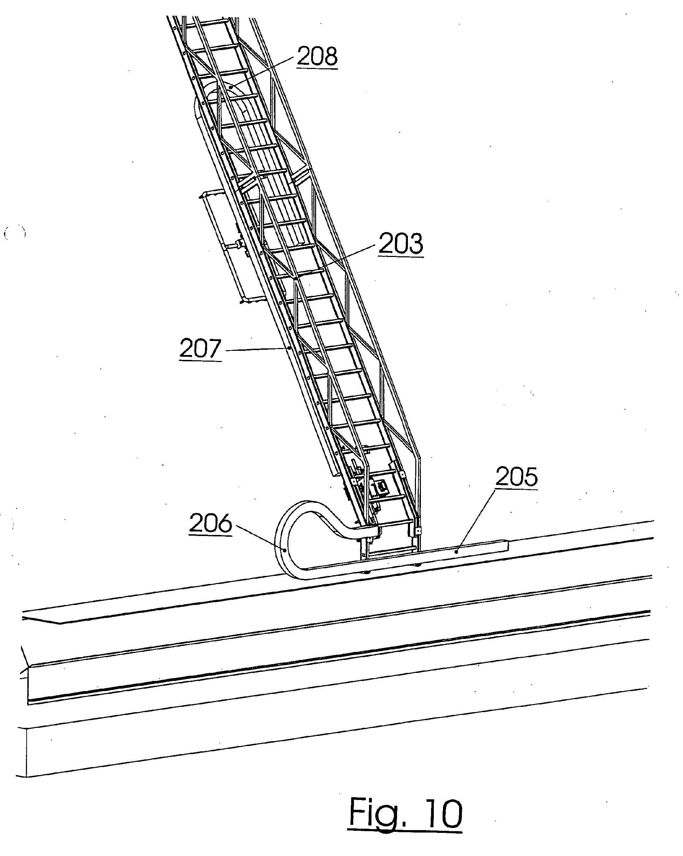

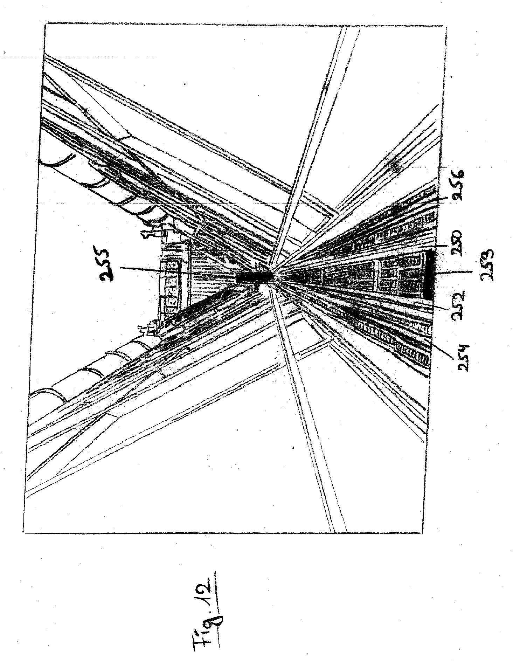

Fig. 12 zeigt den gleichen Gang, wie er in Fig. 11 dargestellt ist, wenn sich die Reinigungsvorrichtung in einer Stellung befindet, die in etwa der Stellung nach Fig. 10 entspricht. Dabei bildet die Schlauchleitung mit der Energiekette einen Bogen.

Die Darstellung beinhaltet die Ansicht eines Betrachters, der in Fig. 10 am linken Ende des Ganges steht. Aus dieser Blickrichtung ist erkennbar, daß die Energiekette die darunter liegenden Roste 253 frei gegeben hat.

In dem Bereich, der zwischen der Reinigungsvorrichtung und dem der Reinigungsvorrichtung abgewandten Ende der Schlauchleitung liegt, bleibt der Gang so, wie er in der Ansicht nach

Fig. 11 dargestellt ist. Für die im Rahmen der Beschreibung zur Fig. 11 erwähnten anderen Ausführungsbeispiele mit bündig abschließenden Roste und Energiekette und Schienen bzw.

Rahmen heißt das, daß dort immer ein leichter und sicherer Zugang zur Reinigungsvorrichtung für das Reinigungspersonal gewahrt bleibt.

Fig. 13 zeigt ein anderes Ausführungsbeispiel in gleicher Ansicht wie Fig.12.

Der Bogen ist dabei mit 260 bezeichnet.

Die Führungsschienen sind mit 261 und 262 bezeichnet und unterscheiden sich von den Führungsschienen nach Fig. 12. Die Schienen 261 und 262 sind aus verschiedenen Profilen zusammengesetzt, so daß sich eine größere Bauhöhe ergibt.

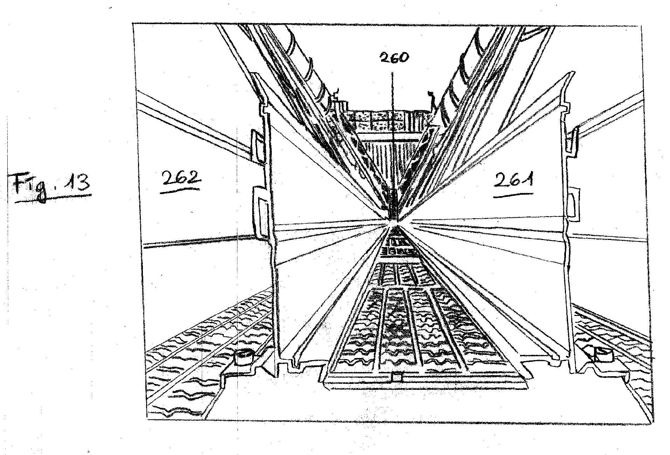

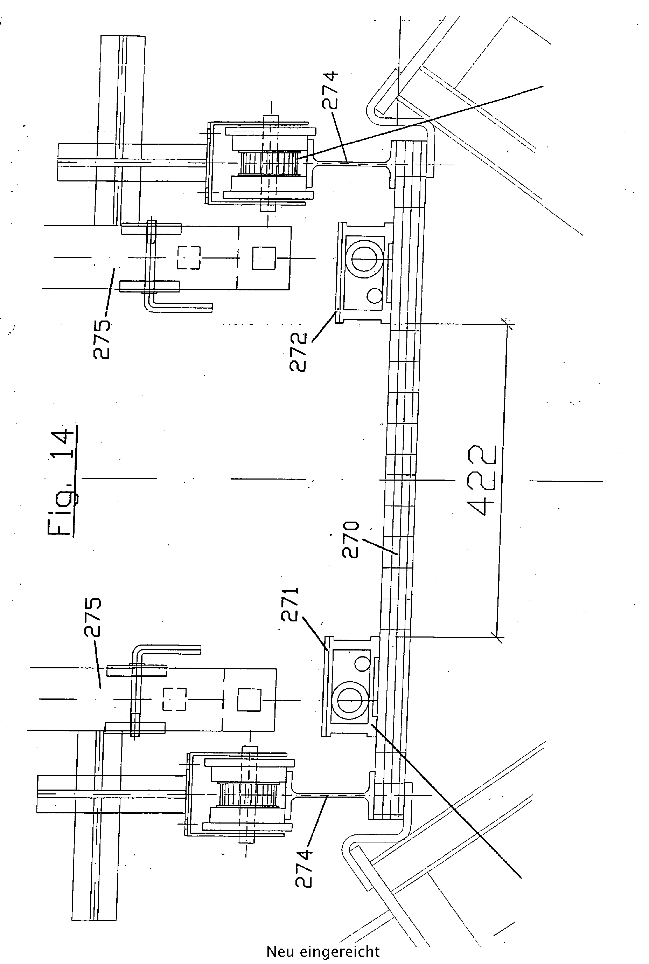

Fig. 14 zeigt ein drittes Ausführungsbeispiel mit einem verhältnismäßig breiten Gang zwischen einander gegenüberliegenden, geneigten Kühldächern. Dabei besitzt der Gang einen anderen Rost 270 als die Ausführungsbeispiele nach Fig. 12 und 13.

Beide Kühldächer sind mit stationären Reinigungsvorrichtungen versehen. Jede der Reinigungsvorrichtungen besitzt eine eigene Wasserzuführung mit einer Schlauchleitung 271 und 272 mit Umkapselung durch eine Energiekette.

Außerdem trägt der Gang die Führungsschienen 274 für Reinigungsvorrichtungen 275.

Mit den dargestellten und beschriebenen Reinigungsvorrichtungen lassen sich Kühldächer mit beliebiger Länge (Reinigungslänge) reinigen. Die Reinigungsbreite hängt von der Länge der Kühlrohre ab. Bisher sind Reinigungslängen bis 100 Metern und Reinigungsbreiten von 12 Metern üblich. Bei großen Kühldächern von zum Beispiel 75 m Reinigungslänge und 11 m Reinigungsbreite kann für einen Reinigungsdurchgang bei normaler Verschmutzung und schonender Reinigung mit einer Reinigungszeit von 6 bis 10 Stunden gerechnet werden.

## Patentansprüche

1. Reinigungsvorrichtung für Kühlflächen
insbesondere für Lukos, Wasserkühler und chemische Anlagen, umfassend einen
a) über den Kühlregistern in Längsrichtung der Kühlrohre verfahrbaren Düsenstock mit mehreren Reinigungsdüsen,
b) wobei die Vorrichtung mit dem Düsenstock quer zur Längsrichtung der Kühlrohre umsetzbar ist, um die Vorrichtung nach Reinigung einer Kühlregisterteilfläche auf eine noch verschmutzte Kühlregisterteilfläche zu versetzen, insbesondere mit einer quer zu den Kühlrohren verfahrbaren Tragwagen für den Düsenstock
c) wobei der Düsenstock mit einer Schlauchleitung als Zuführung für ein flüssiges Reinigungsmittel, vorzugsweise Wasser, verbunden ist und die
d) Schlauchleitung mindestens teilweise in einer Energiekette geführt ist.

2. Vorrichtung nach Anspruch 1, **dadurch gekennzeichnet,**
**daß** der Krümmungsradius der Energiekette gleich oder größer als der zulässige geringste Krümmungsradius für die Schlauchleitung ist.

3. Vorrichtung nach Anspruch 2, **dadurch gekennzeichnet, daß** die Energiekette einen Krümmungsradius von mindestens 300mm besitzen.

4. Vorrichtung nach einem der Ansprüche 1 bis 3, **dadurch gekennzeichnet, daß** die Energiekette aus gegeneinander verschwenkbaren Kettengliedern besteht, deren Schwenkbewegung begrenzt ist, und/oder die mindestens einseitig mit einem Steg verschlossen sind, vorzugsweise an der einen Seite mit einem festen Steg und an der anderen Seite mit einem lösbaren Steg.

5. Vorrichtung nach einem der Ansprüche 1 bis 4, **dadurch gekennzeichnet, daß** die Energiekette die Schlauchleitung mindestens in dem Bereich umfaßt, der durch die Düsenstockbewegung eine Krümmung erfährt.

6. Vorrichtung nach einem der Ansprüche 1 bis 5, **dadurch gekennzeichnet, daß** die Energiekette für eine Schlauchleitung DN 25 oder größer ausgelegt ist.

7. Vorrichtung nach einem der Ansprüche 1 bis 6, **dadurch gekennzeichnet, daß** die Energiekette stehend oder liegend angeordnet ist.

8. Vorrichtung nach einem der Ansprüche 1 bis 7, **dadurch gekennzeichnet, daß** die Energiekette in liegender Ausführung auf beabstandeten Profilen aufliegt.

9. Vorrichtung nach Anspruch 8, **dadurch gekennzeichnet, daß** die Energiekette auf L-förmigen Winkelprofilen aufliegt.

10. Vorrichtung nach Anspruch 8 oder 9, **dadurch gekennzeichnet, daß** die Profile mindestens eine Breite aufweisen, die gleich der halben zugehörigen Energiekettenfläche ist, vorzugsweise mindestens gleich der ganzen Breite der zugehörigen Energiekettenfläche ist..

11. Vorrichtung nach einem der Ansprüche 7 bis 10, **dadurch gekennzeichnet, daß** der obere Abschnitt bzw. Teil der stehenden Energiekette sich auf den unteren Abschnitt bzw. Teil der Energiekette ablegt.

12. Vorrichtung nach einem der Ansprüche 1 bis 11, **dadurch gekennzeichnet, daß** die Schlauchleitung gelenkig oder fest mit dem Düsenstock verbunden ist.

13. Vorrichtung nach einem der Ansprüche 1 bis 12, **dadurch gekennzeichnet, daß** die Schlauchleitung und Energiekette in liegender Anordnung
a)bei einer mobilen Reinigungsvorrichtung mit Portalen,
aa)welche ein Fahrprofil für den Düsenstock tragen, wobei der Düsensstock mit einer Führung auf dem Fahrprofil verfahrbar ist,
bb)wobei das Fahrprofil unterhalb der Traverse jeden Portals von den Portalen getragen wird und
cc)wobei der Düsenstock mit einem Riementrieb oder Seilantrieb oder Kettentrieb als Fahrantrieb versehen ist
in dem Raum zwischen dem Düsenstock und dem Fahrprofil und
in zwei Schlauch- und Energiekettenabschnitten
beiderseits der Führung für den Düsenstock auf dem Fahrprofil angeordnet sind, wobei diese beiden Schlauch- und Energiekettenabschnitte durch einen weiteren, bogenförmig verlaufenden Schlauch- und Energiekettenabschnitt verbunden sind, dessen Bewegungsbahn oberhalb des Düsenstocks und unterhalb des Fahrprofiles verläuft
oder
b)bei einer stationären oder mobilen Reinigungsvorrichtung mit einer Leiter und
aa)unterhalb der Leiter vorgesehenem Fahrprofil für den Düsenstock,
bb)wobei der Düsensstock mit einer Führung auf dem Fahrprofil verfahrbar ist,
cc)wobei das Fahrprofil unterhalb der Leiter von der Leiter getragen wird
dd)wobei der Düsenstock mit einem Riementrieb oder einem Seilantrieb oder einem Kettentrieb als Fahrantrieb versehen ist zwischen dem Düsenstock unterhalb der Leiter und
in zwei Schlauch- und Energiekettenabschnitten
beiderseits der Führung für den Düsenstock auf dem Fahrprofil und beiderseits des Fahrantriebes angeordnet sind,
wobei die beiden Schlauch- und Energiekettenabschnitte durch einen weiteren, bogenförmig verlaufenden Schlauch- und Energiekettenabschnitt verbunden sind, dessen Bewegungsbahn oberhalb des Düsenstockes und unterhalb des Fahrprofiles verläuft.

14. Vorrichtung nach Anspruch 13. **dadurch gekennzeichnet, daß** das Untertrum des Riementriebes oder Kettentriebes oder Seilantriebes oberhalb oder unterhalb der Bewegungsbahn der Schlauchleitung und Energiekette verläuft.

15. Vorrichtung nach einem Anspruch 13 oder 14, **dadurch gekennzeichnet, daß** der verbindende und bogenförmige Schlauch- und Energiekettenabschnitt bei äußeren Abmessungen dieses bogenförmigen Abschnittes,
welche größer als der Abstand sind, den einander gegenüber liegende Stelzen eines Portales oder einander an Leitern gegenüber liegende Stelzen aufweisen,
in dem jeweiligen Frauraum zwischen den Stelzen eines Portales oder den Stelzen einer Leiter und dem Verbindungsteil eines Düsenstückes mit seiner Führung auf dem Fahrprofil liegt.

16. Vorrichtung nach einem Anspruch 13 oder 14, **dadurch gekennzeichnet, daß** der verbindende und bogenförmige Schlauch- und Energieketteabschnitt bei äußeren Abmessungen dieses bogenförmigen Abschnittes,
welche geringer als der Abstand sind, den einander gegenüber liegende Stelzen eines Portales oder einander an Leitern gegenüber liegende Stelzen aufweisen,
in dem jeweiligen Frauraum vor dem Verbindungsteil eines Düsenstückes mit seiner Führung auf dem Fahrprofil liegt.

17. Vorrichtung nach einem der Ansprüche 1 bis 16, **dadurch gekennzeichnet, daß** die Schlauch-und Energiekette bei abschnittsweise verlängerbaren oder einkürzbaren Vorrichtungen in gleichen Längen verlängerbar oder einkürzbar ist.

18. Vorrichtung nach Anspruch 17, **gekennzeichnet durch** lösbare Gelenkbolzen an den Kettenglieder der Energiekettenabschnitte und Schnellverschlüsse an den Schlauchabschnitten.

19. Vorrichtung nach einem der Ansprüche 1 bis 18, **gekennzeichnet durch** eine begehbare Leiter, welche zugleich das Fahrprofil trägt und unmittelbar oder mittelbar auf dem Kühlregister oder einer zugehörigen zuführenden oder abführenden Leitung aufliegt, wobei die Schlauchleitung liegend unterhalb der Leiter angeordnet ist.

20. Vorrichtung nach Anspruch 19, **dadurch gekennzeichnet, daß** die Leiter sich mittelbar über Stelzen oder Portale auf dem Kühlregister oder einer zugehörigen Leitung aufliegt.

21. Vorrichtung nach Anspruch 19, **dadurch gekennzeichnet, daß** die Leiter zur Abstützung abgewinkelt ist.

22. Vorrichtung nach Anspruch 21, **gekennzeichnet durch** eine Abwinkelung der Leiter-Seitenwangen, wobei der Zwischenraum zwischen den Seitenwangen im Bereich der Abwinkelung ganz oder teilweise frei von Leitersprossen ist.

23. Vorrichtung nach einem der Ansprüche 19 bis 22, **gekennzeichnet durch** Leitern mit einem U-förmigen oder V-förmigen Querschnitt oder einem Querschnitt, der zwischen der U-Form oder V-Form liegt.

24. Vorrichtung nach einem der Ansprüche 1 bis 23, **dadurch gekennzeichnet, daß** auch der anlagenseitige Schlauch für die Zuführung des Reinigungsmittels mit einer Energiekette gehalten ist.

25. Vorrichtung nach Anspruch 24, **dadurch gekennzeichnet, daß** der Schlauch für die Zuführung des Reinigungsmittels bei zwei einander gegenüberliegenden geneigten Kühldächern und einem zwischen den Kühldächern liegenden Gang in den Gang eingebettet ist

26. Vorrichtung nach Anspruch 25, **dadurch gekennzeichnet, daß** der Schlauch mit der Energiekette stehend oder liegend angeordnet ist.

27. Vorrichtung nach Anspruch 25 oder 26, **dadurch gekennzeichnet, daß** die Energiekette zumindest teilweise die Trittfläche für den Gang zwischen den gegenüberliegenden Kühldächern bildet.

28. Vorrichtung nach Anspruch 27, **dadurch gekennzeichnet, daß** mindestens an einer Seite der Energiekette eine weitere Gangfläche vorgesehen ist, die mit der Trittfläche der Energiekette bündig abschließt.

29. Vorrichtung nach Anspruch 28, **dadurch gekennzeichnet, daß** die weitere Gangfläche durch einen Rost gebildet wird.

30. Vorrichtung nach einem der Ansprüche 24 bis 29, **dadurch gekennzeichnet, daß** die Energiekette mindestens an einer Seite geführt ist.

31. Vorrichtung nach Anspruch 29, **dadurch gekennzeichnet, daß** die Führung zugleich eine Führungsschiene oder Laufschiene für die Reinigungsvorrichtung bildet.

32. Vorrichtung nach Anspruch 30 oder 31, **dadurch gekennzeichnet, daß** die Führung durch Stahlbleche gebildet wird.
